# EUROPEAN PATENT APPLICATION

(11) **EP 1 983 465 A1**
(43) Date of publication of application: **22.10.2008**
(21) Application number: 06730914.6
(22) Date of filing: 31.03.2006
(51) Int. Cl.: G06F 21/20

(54) **IDENTIFICATION MANAGING SYSTEM FOR AUTHENTICATION OF ELECTRONIC DEVICE**

(30) Priority: 28.12.2005 JP 2005379900
(71) Applicant: MATSUSHITA ELECTRIC INDUSTRIAL CO., LTD., Osaka 571-8501 (JP)
(72) Inventor: TOJO, Masaaki c/o Matsushita Electric Industrial Co., Ltd Intellectual Property Rights Operations Company, Osaka 540-6207 (JP); FUKUI, Kohtaro c/o Matsushita Electric Industrial Co., Ltd Intellectual Property Rights Operations Company, Osaka 540-6207 (JP); TOMITA, Koji c/o Matsushita Electric Industrial Co., Ltd Intellectual Property Rights Operations Company, Osaka 540-6207 (JP)
(74) Representative: Betten & Resch
(86) International application number: PCT/JP2006/306966
(87) International publication number: WO 2007/077638

(57) **Abstract**

In operation of a conventional vertical integration system a primary user cannot provide services to a secondary user belonging to other service group. An identification managing server is proposed to carry out the retrieval of a master-slave relation information by using common identification information as a key and outputs an assurance including its result when the identification managing server receives an assurance request output from a first judgment server at a request of a second judgment server from a first electronic device used by a primary user. Further, the first judgment server outputs an assured service based on such assurance to the second judgment server in order for the primary user to have services from the other vertical integration system to which the secondary user belongs.

## Description

### BACKGROUND OF THE INVENTION

### Field of the Invention

The present invention relates to an identification management system for authentication of electronic devices.

### Description of the Related Art

In Japanese Unexamined Patent Application Publication No. 2004-227055. a service providing system provides service requested from an electronic device, and processes settlement for the provided service. In such a service providing system, a so-called vertically-integrated management form is normally used. Therefore, a manager of the service providing form manages a determination server for authenticating an electronic apparatus, and service provider who provides the service with the electronic apparatus makes a contract with the manager of the service providing system, and provides the service only with the electronic apparatus authenticated by the determination server. According to such a management form, it is possible to provide the service only with the electronic apparatus authenticated by the determination server managed by the manager of the service providing system, so that a merit exists for the manager of the service providing system in that it is possible to ensure the collection of fee for the service from the owner of the electronic apparatus, and a merit exists for the service provider in that it is possible to ask the manager of the service providing system to collect the fee for the service.

In addition, in such a vertically-integrated service system, for example, it is possible to request payment of fee for a service received by an electronic apparatus owned by a child to an electronic apparatus owned by a parent. Therefore, the electronic apparatus owned by child and electronic apparatus owned by parent exist in the same service providing system, so that if there is a contractual agreement, it is possible to carry out settlement for the payment of the fee for the service received by the electronic apparatus owned by the child together with the payment of the fee for the electronic apparatus owned by the parent.
Patent document: Japanese Unexamined Patent Application Publication No. 2004-227055

However, in the conventional vertically-integrated system, since authentication for the settlement of payment for service provision is carried out only with respect to each apparatus receiving the service, for example, in cases where a user desires to pay by another user's terminal apparatus through a credit card company or a bank account, the above system cannot be utilized, thereby causing inconveniences for the user. In addition, there is a deficiency that a user cannot receive the service received by another user in another service providing system. Further, one user cannot receive a service received by another user in another service providing system.

### SUMMARY OF THE INVENTION

In order to solve the above deficiency, it is an objective of the present invention to provide a system enabling utilization across the boundaries of a plurality of service systems used by different users.

In order to solve the above deficiency, the present invention provides a system, in which based on a usage request for the second determination server from the first electronic apparatus used by a first user, a management server for identification, which has received proof request outputted from a first determination server, carries out a search for the second user who has subordinate-superior relationship with the first user, thereby outputting proof indicating that the first user can use a service for the second user who has subordinate-superior relationship with the first user. The first determination server is capable of outputting a service request with proof to a second determination server based on this proof.

In another aspect of the present invention, based on a usage request for the second determination server from the first electronic apparatus used by the first user, the management server for identification, which has received a service request with proof request outputted from the first determination server, carries out a search for the second user who has subordinate-superior relationship with the first user, and based on the search result, thereby outputting the service request with proof to the second determination server.

In another aspect of the present invention, based on a usage request for the second determination server from the first electronic apparatus used by the first user, the second determination server may output the proof request to the management server for identification. In response to this, the management server for identification may carry out searching for the second user who has subordinate-superior relationship with the first user, thereby outputting the proof to the second determination server based on the search result.

According to the present invention, it becomes possible to identify subordinate-superior relationship between users and uniqueness of each user over a plurality of service systems. Therefore, it becomes unnecessary that one electronic apparatus is bound by one service system, thereby removing boundaries between service systems. Accordingly, it is possible to use a plurality of service systems across boundaries by using only one electronic apparatus.

### DETAILED DESCRIPTION OF THE PREFERRED EMBODIMENTS

Hereinbelow, embodiments of the present invention will be described as the preferred embodiments for the present invention. The present invention is not to be limited by the disclosed embodiments, and may be embodied in various forms without departing from the scope of the invention.

Note that the first embodiment will mainly describe Claims 1, 2, 7, 8, 9, 10, 11 and 12. The second embodiment will mainly describe Claims 3, 4, 13 14, 15, 16, 17 and 18. The third embodiment will mainly describe Claims 5, 6, 19, 20, 21, 22, 23 and 24.

### <<First embodiment>>

### <Concept of First Embodiment>

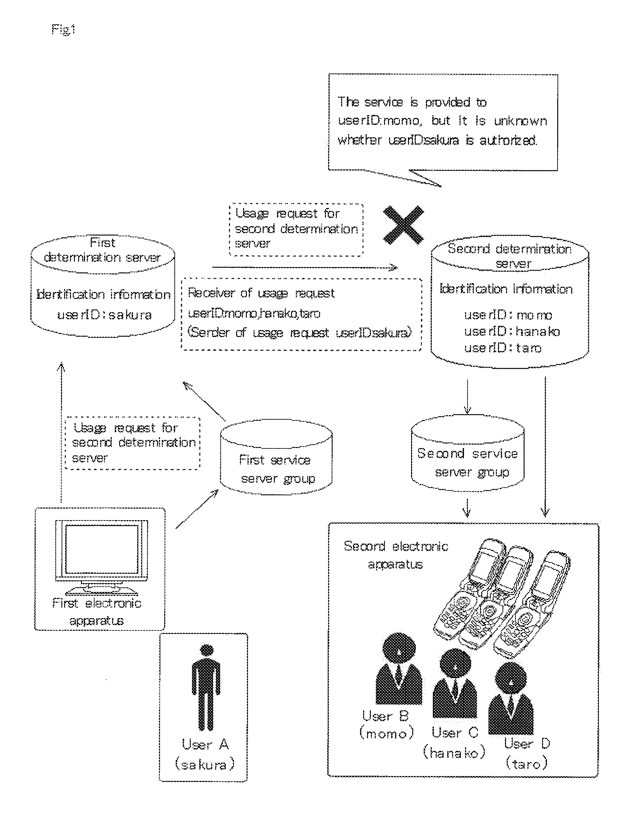

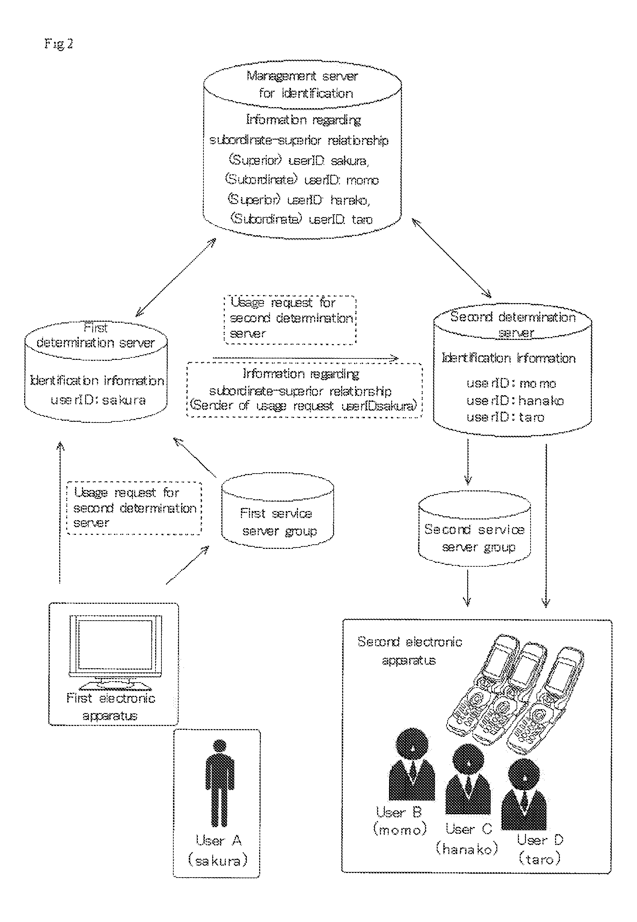

The first embodiment is a system comprising service server groups, electronic apparatuses, determination servers, and management server for identification. Each vertically-integrated management system includes the first service provision system comprising first electronic apparatus used by the first user, first service server group, and first determination server, and the second service provision system comprising second electronic apparatus used by the second user, second service server group, and second determination server. Fig. 1 is a diagram showing one example of the conventional system. In the conventional system of Fig. 1, in cases where the user A (sakura) sends a usage request for the second determination server via the first determination server in order to receive a service for the user B (momo), the user C (hanako), and the user D (taro), since the identification method in each service system is different, the second determination server cannot determine whether the user A has the same authority as that of the users B, C, and D, even if the service is provided to the users B, C, and D, so that the user A cannot receive the service for the users B, C, and D. Meanwhile, Fig. 2 is a diagram explaining an outline of the preset invention for solving the above deficiency. In the example of Fig. 2, a management server for identification accessible from the first service provision system is comprised in addition to the configuration of Fig. 1. In the management server for identification of Fig. 2, information regarding subordinate-superior relationship is managed. By means of this information regarding subordinate-superior relationship, it is possible to remove boundaries between vertically-integrated systems, and to use services in other vertically-integrated systems used by other users across the boundaries.

The 'information regarding subordinate-superior relationship' is information indicating a relative relationship between the first and second users, and indicating a relationship, in which a 'subordinate' user (e.g., the first user) can receive a service etc, for a 'superior' user (e.g., the second user). Specifically, a relationship between parent and child in a family, or a relationship between a manager and an employee in a company is cited. Note that these subordinate-superior relationships do not necessarily have to be based on financial or social relations. For example, a relationship between friends may be included. Further, the subordinate-superior relationship does not necessarily have to be based on relationships between natural persons. For example, a relationship between a company (artificial person) and an employee (a natural person) may be included in the subordinate-superior relationship.

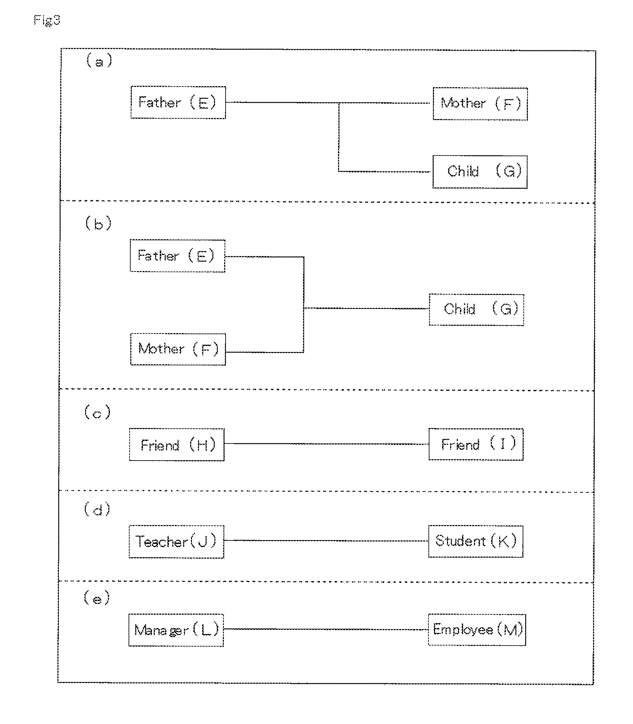

Fig. 3 is a diagram showing an example of a subordinate-superior relationship indicated by the information regarding subordinate-superior relationship. Fig. 3(a) shows a case where mother (F) and child (G) can use a service for father (E). Fig. 3(b) shows a case where child (G) can use service for father (E) and mother (F). Further, the subordinate-superior relationship includes other relationships such as a relationship between friends, a relationship between a teacher and a student, or a relationship between a manager and an employee as shown in Fig. 3(c) to (e). Further, in Fig. 3, a case where a person (superior) on the right side can use the service for a person (subordinate) on the left side is explained, but a case where a person (subordinate) on the left side can use the service for a person (superior) on the right side is also allowed. For example, according to the present invention, the father (E) can make an inquiry for the call history of a mobile phone of another company used by the child (G).

In addition, a concrete example of Fig. 3(e) includes a case where an employee (subordinate) requests transfer of an authority of settlement belonging to a manager (superior). Note that the authority of settlement in this case is assumed to be a kind of electronic signature, and if the authority of settlement is granted, it is possible to make a settlement in the internal system. Hereinafter, the case where the manager (including an immediate superior or a superior of the immediate superior) is away on urgent business and absent for a long period without transferring the authority of settlement is described. In this case, by utilizing the present invention, the employee can prevent a serious stagnation of business due to the impossibility of settlement in the internal system. Therefore, in cases where the transfer of the authority of settlement is requested from the internal system A, to which the employee belongs, to another system B, to which a service server capable of temporarily issuing the authority of settlement belongs, according to the present invention, the request from the internal system A is authenticated in the system B, thereby sending confirmation of the transfer to a manager's terminal belonging to the system B. If the manager's approval is granted, the authority of settlement is transferred from the service server temporarily issuing the authority of settlement to a terminal of the internal system A, to which the employee belongs. Thus, by means of the present invention, if an accident occurs, it is possible to minimize the damage.

Note that throughout this specification, the description as 'the user B who has the subordinate-superior relationship with the user A' means that the user A is 'superior', and the user B is 'subordinate' to the user A.

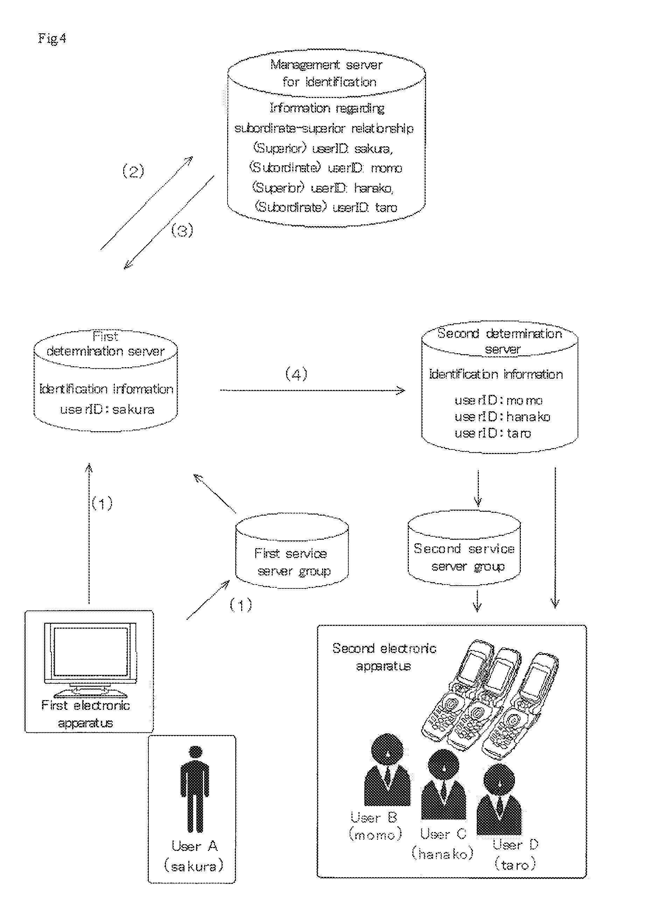

Fig. 4 is a conceptual diagram of a first embodiment. The outline of the processing in Fig. 4 is as follows. Meanings of the respective terms will be described. (1) A usage request for the second determination server is outputted from the first electronic apparatus used by the user A to the first determination server. This usage request may be outputted to the first determination server, or may be sent via the first service server group. (2) The first determination server, which has received the usage request, outputs a first proof request to the management server for identification. (3) The management server for identification, which has received the first proof request, outputs a first proof including the information regarding subordinate-superior relationship based on the shared identification information of the user A and the user B included in the first proof request. (4) The first determination server, which has received the first proof, outputs a service request with proof to the second determination server. Thus, the second determination server, which has received the service request with proof, can provide the service for the first electronic apparatus in accordance with the request.

As described above, in the first embodiment, based on the usages request for the second determination server from the first electronic apparatus, the first determination server outputs the first proof request, and the management server for identification receives it and carries out searching the management unit for identification, thereby outputting proof based on the search result.

### <Configuration of First Embodiment>

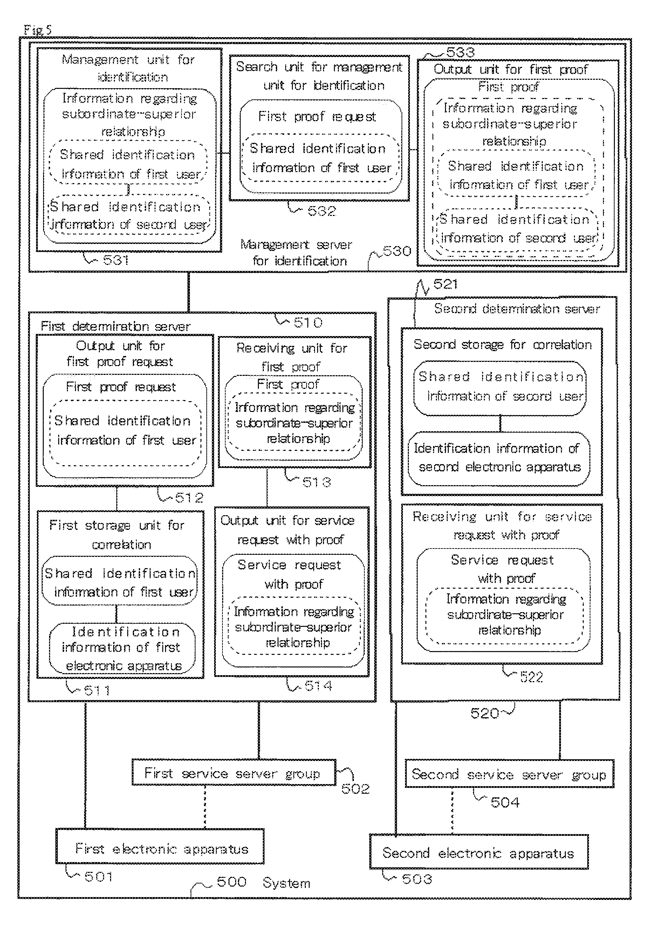

Fig. 5 is a functional block diagram of the first embodiment. A 'system' (500) of the first embodiment comprises a 'first service server group' (502), which provides a first service to a first electronic apparatus (501) based on a first determination, a 'second service server group' (504), which provides a second service to a second electronic apparatus (503) based on a second determination, the first electronic apparatus (501), which is used by a first user, and receives the first service from the first service server group (502), the second electronic apparatus (503), which is used by a second user, and receives the second service from the second service server group (504), a 'first determination server' (510), which carries out a first determination of the first electronic apparatus (501) based on identification information of first electronic apparatus in order to receive the first service from the first service server group (502), a 'second determination server' (520), which carries out a second determination of the second electronic apparatus (503) based on identification information of second electronic apparatus in order to receive the second service from the second service server group (504), and a 'management server for identification' (530), in which a management unit for identification (531) manages information regarding subordinate-superior relationship between the first user and the second user based on shared identification information for uniquely identifying the user in the system.

Each of the 'first determination' and the 'second determination' is a determination carried out by the first determination server (510) or the second determination server (520) on authenticity of the identification information of electronic apparatus sent by the first electronic apparatus (501) or by the second electronic apparatus (503) as a receiver of the first or second service, The 'identification information of electronic apparatus' is information for uniquely identifying an electronic apparatus. For example, the production number of the electronic apparatus is included. The production number may be formed by combining a portion for identifying a manufacturer of the electronic apparatus with a portion indicating a production number in the manufacturer. Further, in cases where the electronic apparatus is a mobile phone, the identification information of electronic apparatus corresponds to a phone number or a number uniquely identifying the mobile phone in a mobile phone network. Further, the identification information of electronic apparatus may include information for identifying a user. Normally, the identification information of electronic apparatus is particularly given to the respective electronic apparatus, and is difficult to falsify. Therefore, in the case of using the identification information of electronic apparatus, it is possible to receive each service in the respective service systems because of the high-reliability of the identification information of electronic apparatus. Further, the identification information of electronic apparatus may be stored in a tamper-resistant area of an electronic apparatus. The 'first service' and the 'second service' are services respectively provided by the first service server group (502) or by the second service server group (504). Example of the usage include browsing of content such as webpage of the internet, browsing of content managed by the first service server group (502) or by the second service server group (504), or communication such as transmission/reception of an e-mail. Further, it is not necessary for the service to be a single one, and may include a plurality of items. The reason for using the terms 'first service server group' and 'second service server group' is that a plurality of service servers may exist for the plurality of service items. Additionally, the first service server group and the second service server group may be configured in one server. Note that the first identification information of electronic apparatus and the second identification information of electronic apparatus are the identification information of electronic apparatus of the first electronic apparatus (501) and the second electronic apparatus (503), respectively. The 'first user' and the 'second user' are users who use the first electronic apparatus (501) or the second electronic apparatus (503), and are not identical.

Note that basically the same expression is used for the term having the same meaning. However, the reference codes for drawings may differ.

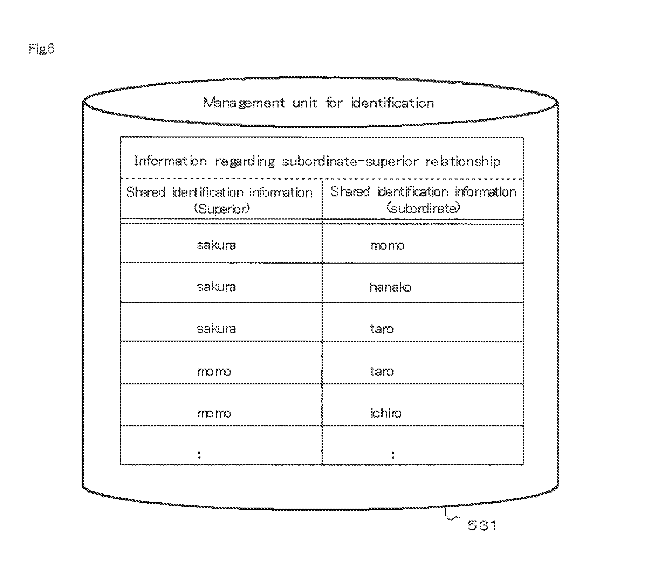

Fig. 6 is a diagram showing an example of information stored and managed by a management unit for identification (531) of a management server for identification (530). In Fig. 6, such information is expressed in a form of being stored in a table. The management unit for identification (531) manages information regarding subordinate-superior relationship of the first user and the second user based on shared identification information as described above. The shared identification information is information for uniquely identifying the user in the system. This shared identification information is an essential concept for the objective of the present invention to use a plurality of service systems across the boundaries by using only one electronic apparatus, Therefore, in the plurality of services, vertically-integrated service systems are respectively estimated, and identification information used by the respective service systems are different depending on each service system, For example, in one service system, the identification information of electronic apparatus belonging to the service system is used as the identification information, and in another service system, different identification information of electronic apparatus suitable for another service system is used as the identification information. Therefore, in the case of utilizing the plurality of service systems across the boundaries, information for uniquely identifying the user in the system is necessary. For the above purpose, the shared identification information is managed by the management unit for identification, and the information regarding subordinate-superior relationship is managed by the management unit for identification based on the above shared identification information.

In Fig. 6, in order to manage the information regarding subordinate-superior relationship of the first and second users based on the shared identification information, a row in the table is provided with respect to each shared identification information, and the shared identification information of the 'superior' user and the shared identification information of the 'subordinate' user are stored therein, so that it is indicated that the user identified by the shared identification information of the 'superior' user can use a service for the user identified by the shared identification information of the 'subordinate' user. For example, Fig. 6 shows that the user identified as 'sakura' can use the service received by the electronic apparatus used by the user identified as 'momo', 'hanako', or 'taro'.

Moreover, the 'subordinate' user can be the 'superior' user. In Fig. 6, the user identified as 'momo' is 'subordinate' to the user identified as 'sakura', but is 'superior' to the user identified as 'taro'. Thus, the subordinate-superior relationship is determined in accordance with a relative relation between users. As a method for registering the subordinate-superior relationship with the management server for identification, for example, a registration of the subordinate-superior relationship via the respective determination servers is cited. Additionally, in the case of registering the subordinate-superior relationship, a confirmation request etc. is outputted from the management server for identification to the determination server, which has requested the registration of the shared identification information of the 'subordinate', and only when the confirmation of authenticity is successful, the shared identification information of the 'subordinate' may be used as the information regarding subordinate-superior relationship. In addition, as to the information regarding subordinate-superior relationship, it is not necessary to clarify the relationship between the 'superior' and 'subordinate'. Therefore, as to a user correlated with one user, a system of mutual relationship, in which each user can receive a service received by another user, may be established. Note that, in this specification including drawings, there is no difference between 'userID:momo' and 'momo', and they are identical as the shared identification information.

In addition, as to the information regarding subordinate-superior relationship, not only the subordinate-superior relationship but also the second service received by the second user as the 'subordinate' may be correlated and managed. In such case, the first user as the 'superior' as to each service is registered to the management server for identification, thereby appropriately responding to segmented various services.

### (Configuration of First Determination Server of First Embodiment)

The first determination server carries out a first determination of the first electronic apparatus based on identification information of first electronic apparatus in order to receive the first service from the first service server group. The 'identification information of first electronic apparatus' is for uniquely identifying the first electronic apparatus in the first service server group and in the first determination server as described above. Note that it may be user identification information for identifying user who receives the first service via the first electronic apparatus, not identification information of the first electronic apparatus itself. Therefore, the identification information of first electronic apparatus is identification information normally used for determination by the first determination server as to whether the first electronic apparatus is an appropriate electronic apparatus, which receives service, and is generally identification information for a system independently established in order to receive the first service. For example, it corresponds to the identification information used in an independent system (hereinafter, referred to as system X), comprising a server for a charge process and service server group for providing a plurality of services, which execute the charge process by means of the server for charge process. The first determination server basically carries out a first determination as to whether the first electronic apparatus can receive the first service from the first service server group based on identification information of first electronic apparatus in order to establish the independent vertically-integrated service system. This determination is carried out in cases where the first electronic apparatus transmits the identification information of first electronic apparatus of itself to the first determination server, thereby requesting the first service. As described above, the identification information of electronic apparatus is particularly given to the respective electronic apparatus, and is normally stored in a state where falsification is impossible. By utilizing this identification information of electronic apparatus, the first service is provided to the unique first electronic apparatus in the system with high-reliability, However, the above processes are carried out within the system relating to the first service, and are independent processes in the first service system (therefore, the reliability of the first electronic apparatus is enhanced). The present invention implements the cross-cutting use of the different independent systems across the boundaries between the vertical services in the independent systems.

As shown in Fig. 5, the first determination server (510) comprises the 'first storage unit for correlation' (511), the 'output unit for first proof request' (512), the 'receiving unit for first proof' (513), and the 'output unit for service request with proof' (514).

The 'first storage unit for correlation' (511) stores the shared identification information of the first user correlated with the identification information of first electronic apparatus. For example, a table, which includes a column storing values of the shared identification information of the first user, and a column storing values of the identification information of first electronic apparatus, is stored in storing means. Subsequently, the values of the shared identification information and the values of the identification information of first electronic apparatus are stored in the same row of the table, thereby indicating that the user identified by the shared identification information uses the electronic apparatus identified by the identification information of first electronic apparatus. The term 'shared identification information' is information for uniquely identifying a user in the system. Normally, it is not necessary to use the shared identification information at the stage of establishment of the above-mentioned system X, but in order to implement cross-cutting use of different service systems, it is necessary to subsequently introduce conceptual information shared in the independent system. Therefore, after establishment of the independent system (e.g., the first service system), the shared identification information as the conceptual information is introduced in order to promote the cross-cutting use (e.g., a user of an electronic apparatus, which belongs to the first determination server, uses the service for an electronic apparatus, which is used by another user and belongs to the second determination server) between the independent system and another independent system (e.g., the second service system). Generally, it is assumed that this shared identification information is added to the determination server according to the desire of the user who owns the electronic apparatus. Various distribution channels for providing the shared identification information to the determination server may exist and it is not limited to one. Of course, this is just one example, and it is possible to preliminarily design, such that the shared identification information is used along with the identification information of apparatus, which is an independent identification information system upon establishing the independent service system.

A more detailed description of the shared identification information is provided. At the outset, in cases where the one user A receives the first and second services, the identification information of first electronic apparatus and the identification information of second electronic apparatus (after-defined), which is different identification information, are used.

The above identification information is unique identification information in the different service systems, so that they are different identification information irrespective of the user being the same person or another person. Therefore, for example, the second determination server cannot determine that the second service, which is received by the second electronic apparatus used by the second user, can be provided to the first electronic apparatus based on the identification information of first electronic apparatus used by the first user. However, identification is carried out by means of the shared identification information used in order to receive benefit of the present invention (i.e., cross-cutting use between different independent systems), so that it is possible to ensure uniqueness of the first user and of the second user in the system, thereby uniquely identifying each user. As after-mentioned, the authenticity of the subordinate-superior relationship based on the shared identification information is examined by the management server for identification, and a request with the result as proof is outputted to the second determination server, so that, for example, it is possible for the first user to receive the second service received by the second electronic apparatus of the second user.

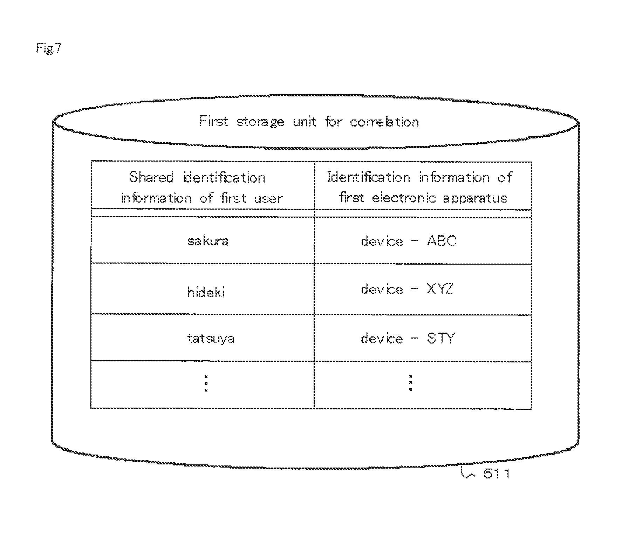

Fig. 7 shows a table stored by the first storage for correlation (511). Fig. 7 shows an example in which the first user identified as 'sakura' uses the first electronic apparatus identified as 'device-ABC'.

The 'output unit for first proof request' (512) outputs a first proof request including the shared identification information of the first user based on a usage request for the second determination server from the first electronic apparatus. A destination of the first proof request is the management server for identification. The process of outputting the first proof request by the output unit for first proof request is an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Another example of the usage request includes a request for providing the first service to the second electronic apparatus via the second determination server from the first electronic apparatus. Conventionally, the first electronic apparatus used by the first user can receive service only in the first service system. Meanwhile, in the present invention, it is possible to receive a predetermined service in the other service system across boundaries. Specifically, it is an objective of the present invention to use the second determination server. Concretely speaking, a request for acquiring a decryption key via the second determination server in order to make encrypted content etc., downloaded by the second electronic apparatus used by a second user nonidentical to the first user, available to the first electronic apparatus used by the first user, and a request for acquiring a password via the second determination server in order to make personal information (e.g., a schedule or a patient's chart), downloaded by the second electronic apparatus, available to the first electronic apparatus, are cited. Additionally, a request for settlement for the first electronic apparatus by means of charging service executed in the second electronic apparatus is cited. In addition, for example, based on the request from the first electronic apparatus, a request for executing the wake-up service as the second service in exchange for the charge to the first electronic apparatus is cited. Moreover, a request for simultaneously acquiring positional information of the second electronic apparatuses by the first electronic apparatus by means of GPS (Global Positioning System) function available to the second electronic apparatus is cited. Reiteratively speaking, conventionally, these processes have been impossible for the first electronic apparatus. The reason for this is that the first electronic apparatus can receive service only in the first service system, and these processes are possible only for the second electronic apparatus in the second service system. Further, in terms of security etc, it is impossible that the first user uses the service received by the second user, who is different from the first user, across the boundaries.

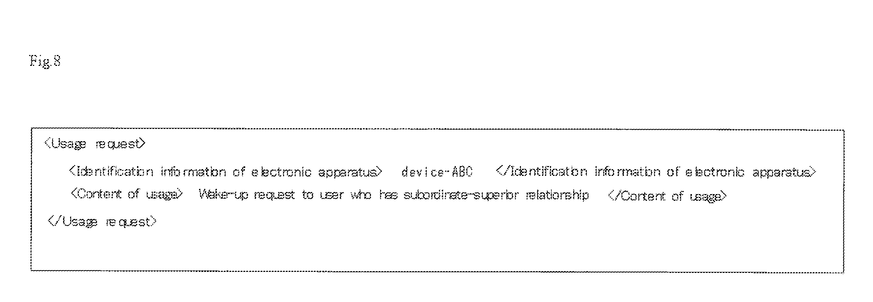

Fig. 8 shows an example of a usage request. In Fig. 8, the first user requests usage of the second determination server via an electronic apparatus identified as 'device-ABC', which is owned, occupied, or managed by the first user. In addition, as a usage of the second determination server, a request for using the second service (the wake-up service in Fig. 8) received by the user (second user), who has subordinate-superior relationship with the first user, in the second service server group is included in the usage request. Note that, it is not indicated in Fig.8, the usage request can include additional information such as type of usage of the second determination server, designation of the second determination server, designation of a server in the second service server group, designation of a service provided by the second service server group, and charging method of a payment for the service. Moreover, this additional information may be correlated with the first proof request, and may be outputted to the output unit for first proof request (512).

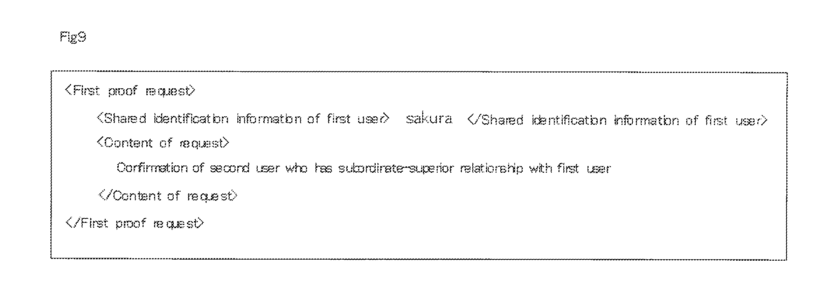

Fig. 9 is a diagram showing an example of a first proof request outputted by the output unit for first proof request of the first determination server based on the usage request for the second determination server of Fig. 8. In Fig. 9, the shared identification information of the first user 'sakura' is included. The reason for this is that since the first storage for correlation (511) stores the shared identification information of the first user correlated with the identification information of first electronic apparatus, by searching the first storage for correlation by means of the identification information of the first electronic apparatus, which has sent the usage request, as a key, it is possible to acquire the shared identification information of the user of the first electronic apparatus (i.e., first user). Note that, even in cases where the usage request does not include the identification information of first electronic apparatus, the identification information of first electronic apparatus upon start of session may be used in the same session, and moreover, the identification information of first electronic apparatus may be extracted from a cookie issued by the server. After the search, in cases where the shared identification information is stored, it is acquired, is included in the first proof request, and is outputted to the management server for identification.

In addition, as shown in Fig. 9, a request for confirmation of the second user, who has subordinate-superior relationship with the first user, due to reading of the information included in the usage request, indicating usage of service for a user who has subordinate-superior relationship, may be included in the first proof request. Moreover, the first proof request includes the shared identification information of the first user (sakura in Fig. 9), and as described above, may include additional information such as information for identifying the second determination server.

The first proof request is outputted in order to acquire a proof indicating uniqueness of the first user identified by the shared identification information, a proof indicating uniqueness of the second user who has subordinate-superior relationship with the first user (including proof of uniqueness of each second user of a plurality of the second users. The same applies throughout this specification), and a proof indicating that the first user can use the service etc. used by the second user from the management server for identification. Therefore, in this system, although it is an objective to enable the first user to receive the second service received by the second user belonging to the different service system, it is difficult for the second service server to determine whether the first service server can receive the second service. However, by utilizing the shared identification information of the present invention, uniqueness of the user is proved. Therefore, the subordinate-superior relationship of the first user, whose uniqueness is proved, and the second user whose uniqueness is proved is identified by the management server for identification, thereby proving the subordinate-superior relationship between the first user and the second user. Subsequently, if the subordinate-superior relationship of the first user and the second user is confirmed, the second determination server can determine that the first user can receive the second service.

The 'receiving unit for first proof' (513) receives the first proof including the information regarding subordinate-superior relationship returned from the management server for identification in accordance with the first proof request outputted from the output unit for first proof request (512). The process in the management server for identification will be described hereinbelow. The first proof includes information proving the subordinate-superior relationship based on the shared identification information of the first user included in the first proof request. Therefore, the information, which proves that the user identified by the shared identification information of the first user is 'superior' to the user identified by the shared identification information of the second user, therefore, the information, which proves that the user can receive the service for the second user, and can execute the service for the second user, is included. The terms 'information, which proves' corresponds, for example, to a signature by means of a secret key stored by the management server for identification (e.g., information, in which hash value of information to be proved is encrypted by a secret key stored by an entity giving the signature). In addition, information, proving that the shared identification information of the first user and the shared identification information of the second user are managed in the management server for identification, may be included in the first proof received by the receiving unit for first proof.

In addition, in the present invention, if there are a plurality of the second users, who has subordinate-superior relationship with the first user, all information of the second users are included in the first proof. Therefore, the first proof, which includes, for example, the information regarding subordinate-superior relationship managed in the management server for identification as a list of the second users, who has subordinate-superior relationship with the first user, by means of the shared identification information of the first user included in the first proof request as a key, is returned from the after-mentioned management server for identification without change. Examples of the content of the first proof include a proof indicating that the first user can use the service etc. used by the second user who has subordinate-superior relationship with the first user, and a proof indicating uniqueness of the user identified by the shared identification information. Thus, it is possible to request for services for all second users, who have a subordinate-superior relationship with the first user.

Note that for example, in cases where the shared identification information of the first user is not managed in the management server for identification, error information may be received, or by setting a predetermined time, if there is no reply from the management server for identification for the predetermined time, it may be determined that the reception of the first proof has failed. In addition, if the reception of the first proof has failed, the error information may be outputted to the first electronic apparatus. In addition, even if the shared identification information of the first user and the second user are managed by the management server for identification, in cases where the information is not managed as the information regarding subordinate-superior relationship, therefore, in cases where there is no second user, who has subordinate-superior relationship with the first user, a different type of error information from the above error information may be received as the first proof.

The 'output unit for service request with proof (514) outputs a service request with proof including the information regarding subordinate-superior relationship based on the first proof received by the receiving unit for first proof (513). The service request including the proof by the management server for identification is outputted from the first determination server, so that authenticity of the service request is proved between the first and second determination servers, which are different service systems. Therefore, it can be identified that the one user has requested for the service used by another user under mutual agreement. Therefore, the uniqueness of the user requesting the service, and the user receiving the request for the service, are respectively identified in the system by means of the shared identification information, so that it is possible to prevent an error such as a service used by another user, which is not desired, is mistakenly requested. In addition, the shared identification information is included in the service request with proof, thereby providing services to all second users, who have subordinate-superior relationship, in the second determination server's side.

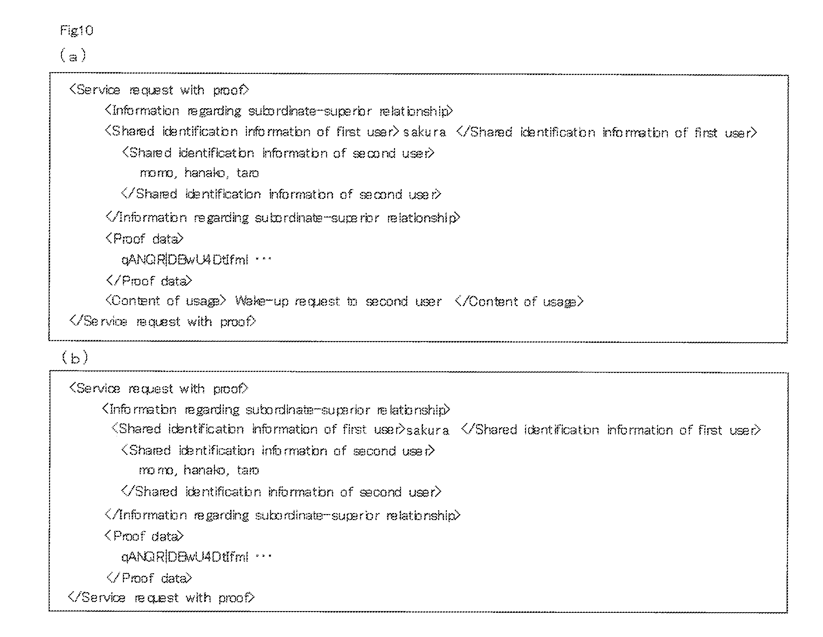

Fig. 10 is a diagram showing an example of a service request with proof. Fig. 10(a) shows that the first user identified as 'sakura' wishes to use the second determination server (execution of wake-up service for the second user) used by the second users identified as 'momo', 'hanako', and 'taro', who have the subordinate-superior relationship. In addition, in Fig. 10(a), the shared identification information 'sakura' exists, and is managed by the management server for identification, and the information regarding proof indicating that the user identified as 'sakura' has the subordinate-superior relationship with the second users identified as 'momo', 'hanako', and 'taro' is put in a portion between '<proof data>' and '</proof data>'. This portion corresponds to the first proof received by the receiving unit for first proof (603). In addition, the first proof may include items such as usage type of the second determination server, designation of the second determination server, designation of a server in the second service server group, designation of a service provided by the second service server group, and charging method of a payment for the service, or may be correlated with them. In addition, in accordance with the items, the information put in the portion between '<proof data>' and '</proof data>' may be the information for proving that the item is managed by the management server for identification. In addition, the identification information of the first electronic apparatus or of the first determination server, which receive the service, may be included. Fig. 10(b) shows a case where the designated item of the service provided by the second service server group corresponding to the 'content of usage' in Fig. 10(a) is not included. The case of Fig. 10(b) is a case where service can be uniquely determined if the second user is designated.

### (Processing of First Determination Server of First Embodiment)

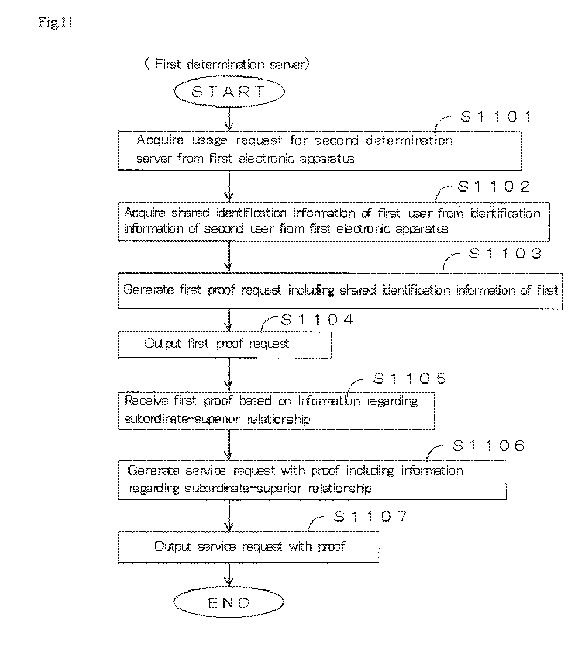

Fig. 11 is a flowchart showing processing of a first determination server of the first embodiment. The first determination server carries out processes in this flowchart every time acquisition of the usage request for the second determination server from the first electronic apparatus becomes possible. In step S1101, the usage request for the second determination server is acquired from the first electronic apparatus. For example, read system call in communication by means of socket is executed in the output unit for first proof request (512). In step S1102, the shared identification information of the first user is acquired from the identification information of the first electronic apparatus. For example, the identification information of the first electronic apparatus, which has transmitted the usage request in step S1101, is acquired, and search of the first storage unit for correlation (511) etc. is carried out by means of the acquired identification information of the first electronic apparatus, thereby acquiring the shared identification information of the first user.

In step S1103, the first proof request including shared identification information of the first user is generated with reference to the information acquired by steps S1101 and S1102. For example, the first proof request as shown in Fig. 9 is generated, and is stored in a memory. In step S1104, the first proof request is outputted. For example, communication connection with the management server is established, and by means of acquired socket, write system call is executed in the output unit for first proof request (512).

In step S1105, the first proof including the information regarding subordinate-superior relationship is received. For example, read system call by means of the socket of the communication connection established in step S1104 is executed in the receiving unit for first proof request (513). In step S1106, based on the received first proof, the service request with proof including the information regarding subordinate-superior relationship is generated. For example, the information as shown in Fig. 10 is generated and is stored in a memory. In step S1107, the service request with proof is outputted. For example, communication connection with the second determination server is established, and by means of acquired socket, write system call is executed in the output unit for service request with proof (514).

After that, if service is provided from the second determination server or from the second service server group, the first determination server transfers the service to the first electronic apparatus used by the first user. In addition, in cases where the identification information of the first electronic apparatus is included in the service request with proof, the service may be directly provided from the second determination server or from the second service server group to the first electronic apparatus used by the first user.

### (Configuration of Second Determination Server of First Embodiment)

The second determination server carries out a second determination based on identification information of second electronic apparatus, so that the second electronic apparatus receives the second service from the second service server group. The second electronic apparatus is an electronic apparatus used by the second user nonidentical to the first user. The 'identification information of second electronic apparatus' is for uniquely identifying the second electronic apparatus in the second service server group and in the second determination server. Note that it may be user identification information for identifying user who receives the second service via the second electronic apparatus. Therefore, the identification information of second electronic apparatus is identification information normally used for determination by the second determination server as to whether the second electronic apparatus is an appropriate electronic apparatus, which receives service, and is generally identification information for a system independently established in order to receive the second service.

As shown in Fig. 5, the second determination server (520) comprises the 'second storage unit for correlation' (521), and the 'receiving unit for service request with proof' (522).

The 'second storage unit for correlation' (521) stores the shared identification information of the second user correlated with the identification information of second electronic apparatus. Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is an independent identification information system upon establishing the independent service system.

The second determination server carries out a second determination as to whether the second electronic apparatus can receive the second service from the second service server group based on identification information of second electronic apparatus in order to establish the independent service system. This determination is carried out in cases where the second electronic apparatus transmits the identification information of second electronic apparatus of itself to the second determination server, thereby requesting the second service. The above processes are carried out within the system relating to the second service, and are independent processes in the second service system. The above processes are carried out in order to provide vertical service in the independent system, differently from the cross-cutting use of the different independent systems, which the present invention intends to implement.

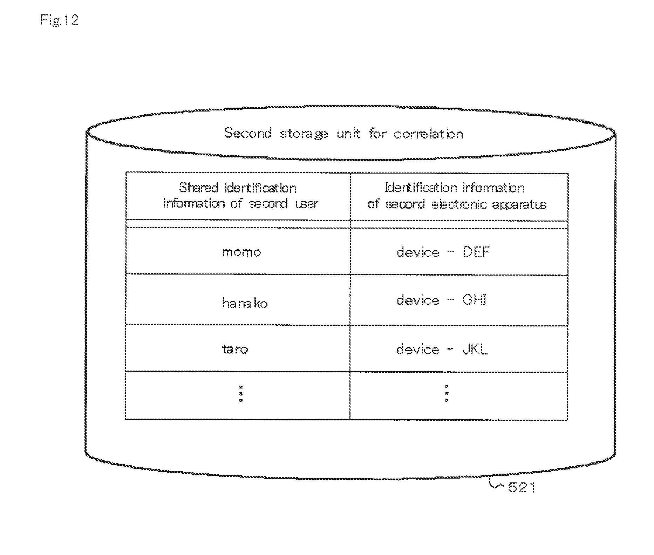

Fig. 12 is a diagram showing an example of a table stored by a second storage for correlation (521). Fig. 12 shows that the second user identified as 'momo' uses the electronic apparatus identified by 'device-DEF'.

The 'receiving unit for service request with proof' (522) receives a service request with proof. The service request with proof is generated based on the first proof, thereby possessing high reliability. Therefore, the second determination server may provide service according to the received service request. The reason for this is that the second determination server has a relationship of trust, and the proof by the management server for identification is given, so that the second determination server can determine the authenticity of the service request. Further, there is a case where the first proof outputted from the management server for identification is encrypted by the private key of the management server for identification. In this case, although the service request with proof includes encrypted proof, the second determination server may carry out decryption by means of the public key of the management server for identification, and may confirm content of the proof (e.g., an authenticity such as a signature given to proof of the subordinate-superior relationship). Further, the second determination server may carry out search by means of the shared identification information of the second user as a key based on the service request. This will be described in the second configuration of the first embodiment.

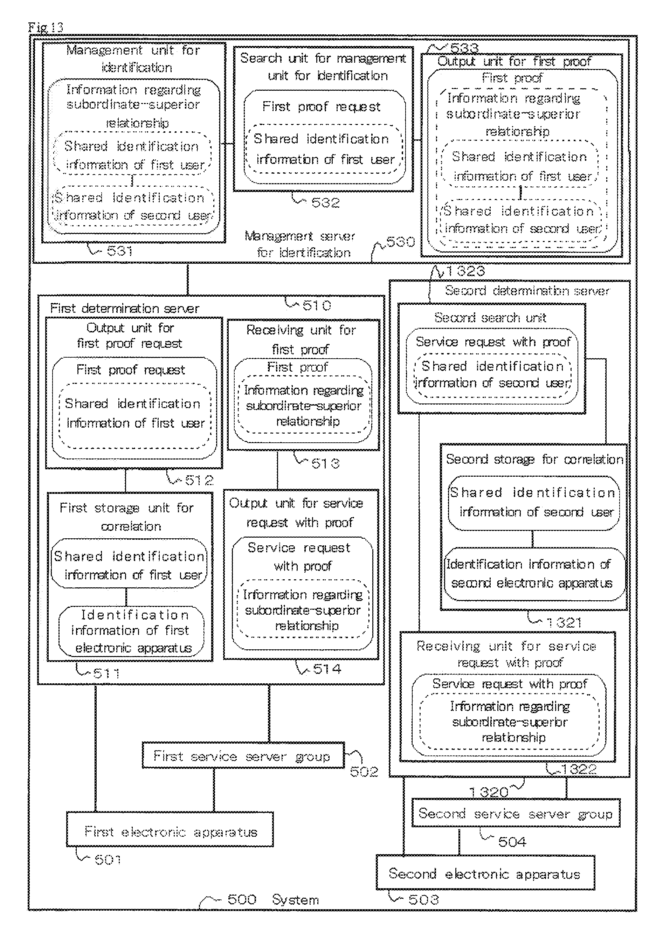

Fig. 13 is a functional block diagram of the second determination server carries out search by means of the shared identification information of the second user as a key based on the service request. Comparing Fig. 5 and 13, a second search unit (1323) is added to the second determination server (1320) of Fig. 13.

The 'second search unit' (1323) searches the second storage unit for correlation (1321) by means of the shared identification information of the second user as a key based on the service request with proof received by the receiving unit for service request with proof (1322). The search carried out by means of the shared identification information of the second user as a key is a search, in which the shared identification information of the second user included in the service request with proof is extracted, and search as to whether the shared identification information corresponding thereto is stored in the second storage unit for correlation is carried out. If the corresponding shared identification information is acquired, a service in accordance with the service request with proof (e.g., execution of wake-up service, acquisition of positional information, payment of a fee for the first service, transmission of a decryption key of encrypted content etc., or transmission of a password) may be provided. In addition, the search result may be transmitted to the first determination server or to the second electronic apparatus (via the second service server group). Moreover, it is possible to provide services to all second users indicated by the information regarding subordinate-superior relationship.

In the first embodiment, it is proved by the management server for identification that the first user and the second user identified by the shared identification information solely exist, and the first user, who has the subordinate-superior relationship with the second user, can receive the second service used by the second user, so that the second determination server can determine the authenticity of the service request. The reason for this is as follows. The second determination server usually uses the identification information of second electronic apparatus for identifying an electronic apparatus, which can receive service. Therefore, the identification information of second electronic apparatus is used for the second determination. Therefore, the second determination server can put trust in a target having the identification information of second electronic apparatus, but basically cannot confirm authenticity of a target by other means. Meanwhile, in the present invention, there is a case where the identification information of second electronic apparatus correlated with the shared identification information in the second determination server is exceptionally utilized. This correlation with the shared identification information means that, for example, a user who uses an electronic apparatus identified by the identification information of second electronic apparatus (e.g., 'device-DEF') and a person who is identified by the shared identification information (e.g., 'momo') are the same second user. Here, if the usage request for second determination server is sent from the second user identified by the shared identification information, the second determination server regards it as the request from the second user identified by the identification information of second electronic apparatus. However, if the identification information of the second user 'momo' is redundantly given in the system, it is not limited to the above case. Therefore, if a third user identified as 'momo', the same shared identification information as that of the second user, belongs to the second service system, there is a possibility that a true user is not recognized. In order to solve this problem, it is necessary to ensure that the identification information 'momo' is not redundantly given in the system. Therefore, if the uniqueness of 'momo', and the subordinate-superior relationship between the users, whose respective uniqueness is proved, is proved, the second determination server can recognize that 'momo' has given permission for the usage even if 'momo' is included in the request from the unknown determination server, and can permit the service provision for the user of the 'device-DEF'

Although the first and second determination servers are distinguished in the above case, it does not mean that they cannot have similar functions. In addition, although the first determination server and the second determination server are distinguished for convenience in the other embodiments, they may have the same functions.

### (Processing of Second Determination Server of First Embodiment)

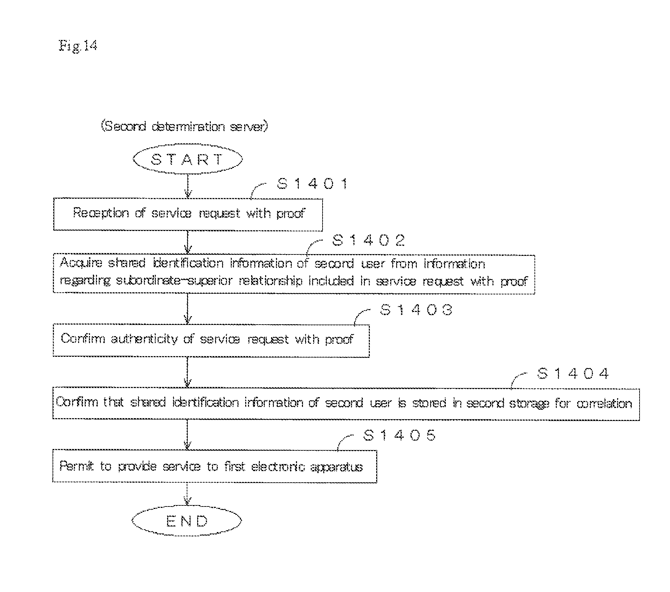

Fig. 14 is a flowchart showing processing of the second determination server of the first embodiment. The second determination server carries out processes in the flowchart of Fig. 14 every time reception of the service request with proof becomes possible. In step S1401, the service request with proof is received. After detecting the availability of reception of the service request with proof, communication connection with the first determination server is established, so that read system call by means of the acquired socket is executed in the output unit for service request with proof (522). In step S1402, the shared identification information of the second user is acquired from the information regarding subordinate-superior relationship included in the service request with proof received by step S1401. In step S1403, authenticity of the service request with proof received by step S1401 is confirmed. For example, by means of the public key of the management server for identification, an examination of the signature etc. is carried out. In addition, proof indicating that the second user identified by the shared identification information acquired by step S1402 has a subordinate-superior relationship with the first user is acquired.

In step S1404, it is confirmed that the shared identification information of the second user acquired by step S1402 is stored in the storage unit for correlation. In accordance with this confirmation, it is possible to confirm that the second user, who is indicated by the information regarding subordinate-superior relationship, and is included in the service request with proof, is the user who uses the second electronic apparatus, which receives the service based on the determination by the second determination server. Therefore, a charge process of the payment for the service etc. can be carried out in the second determination server's side. Note that this confirmation process is carried out for all second users included in the information regarding subordinate-superior relationship.

In step S1405, based on the confirmation by step S1404, the service provision for the first electronic apparatus is permitted. For example, provision of the service for the first electronic apparatus is instructed to a server of the second service server group. Note that in cases where such instruction is outputted to the server of the second service server group, the shared identification information of the first user, which can be included in the service request with proof acquired by step S1401, may be include in the instruction. Therefore, the server of the second service server group can identify the first user, who receives the service, and for example, it is possible to determine whether a similar or same service has been provided in the past. Based on this determination, the first user, who has received the similar or same service, may receive the service at miscounted price or no fee.

### (Configuration of Management Server for Identification of First Embodiment)

The 'management server for identification' stores the information regarding subordinate-superior relationship based on the shared identification information, and manages each server. There are relationships of trust between the management server for identification and the first determination server, and between the management server for identification and the second determination server. As shown in Fig. 5, the 'management server for identification' (530) comprises a 'management unit for identification' (531), a 'search unit for management unit for identification' (532), and an 'output unit for proof (533).

The management unit for identification (531) has already been already described. The management unit for identification (531) manages the information regarding subordinate-superior relationship between the first and second users based on the shared identification information for uniquely identifying the user in the system. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information in the system is unique. Similarly, the information regarding subordinate-superior relationship based on the shared identification information is assumed to have been preliminarily registered by the user with the management server for identification. Further, the information regarding subordinate-superior relationship between the first and second users is managed based on the shared identification information, so that, for example, it is possible to prove that the first user has 'superior' relationship with the second user.

The 'search unit for management unit for identification' (532) searches the information regarding subordinate-superior relationship in the management unit for identification by means of the shared identification information of the first user as a key, included in the first proof request outputted by the first determination server. At the outset, the shared identification information of the first user included in the first proof request is extracted, and search as to whether a record of the information regarding subordinate-superior relationship corresponding thereto is stored in the management unit for identification is carried out. By this search, based on the shared identification information of the first and the second users, it is possible to prove the uniqueness of each user in the system, and to prove the subordinate-superior relationship between the first and second users. Moreover, by means of the shared identification information of the second user, it is possible to prove uniqueness of the second user who has the subordinate-superior relationship in the system

The 'output unit for first proof' (533) outputs the first proof based on a search result by the search unit for management unit for identification. A destination of outputting the first proof is the first determination server. In cases where the information regarding subordinate-superior relationship including the shared identification information of the first user as a primary key is acquired, it is possible to output proof indicating that the first and second users have the subordinate-superior relationship. Note that, in cases where the shared identification information of the first does not exist as the primary key, but there is a subordinate relationship, the first user does not have 'superior' relationship, so that it becomes unnecessary to output the first proof. In addition, in cases where the shared identification information of user has not been acquired, error information indicating that may be separately outputted. In addition, the first proof outputted to the first determination server may be encrypted by a private key of the management server for identification. In this case, the second determination server, which receives the service request with proof, carries out decryption by the public key of the management server for identification, and if the proof is confirmed, it is possible to prevent falsification and impersonation.

### (Processing of Management Server for Identification of First Embodiment)

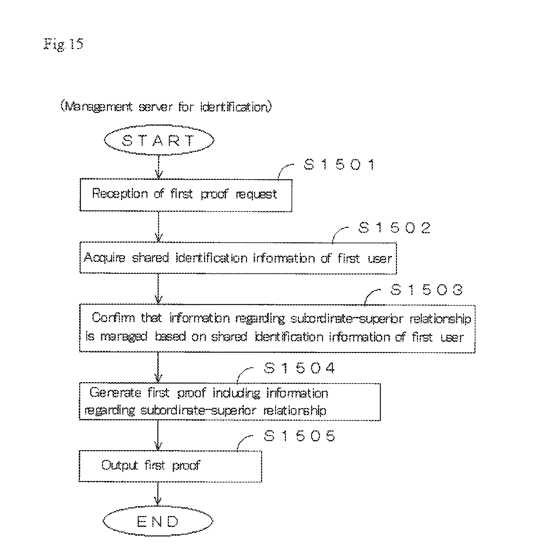

Fig. 15 is a flowchart showing processing of the management server for identification. The management server for identification carries out processes in the flowchart of Fig. 15 every time reception of the first proof request becomes possible. In step S1501, the first proof request is received. For example, by means of the socket generated in accordance with a request for establishment of the communication connection from the first determination server, read system call is executed in the search unit for management unit for identification (532) etc. In step S1502, the shared identification information of the first user is acquired. In step S1503, based on the shared identification information of the first user acquired by step S1502, it is confirmed that the information regarding subordinate-superior relationship is managed by the management unit for identification (531) by searching the management unit for identification. Concretely speaking, search as to presence of the record including the shared identification information of the first user as the primary key is carried out. In step S1504, based on the confirmation of step S1503, the first proof is generated, and at least, the first proof is temporarily stored in storage means such as a memory. In step S1505, the first proof generated and stored in step S1504 is outputted. For example, by means of acquired socket of the communication connection established in step S1501, write system call is executed in the output unit for first proof (533).

### <Processing of Entire System of First Embodiment>

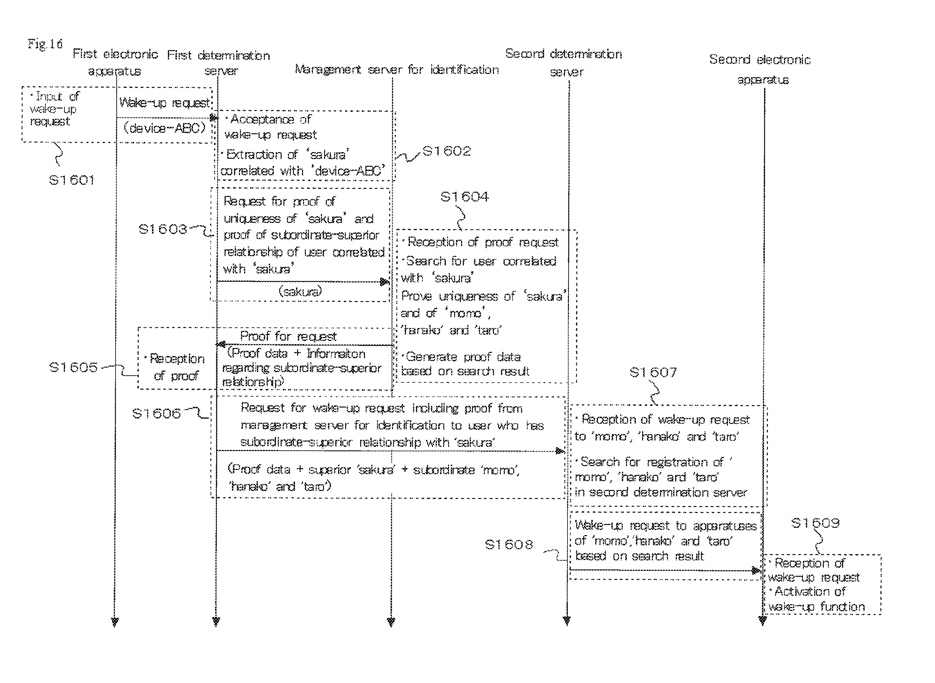

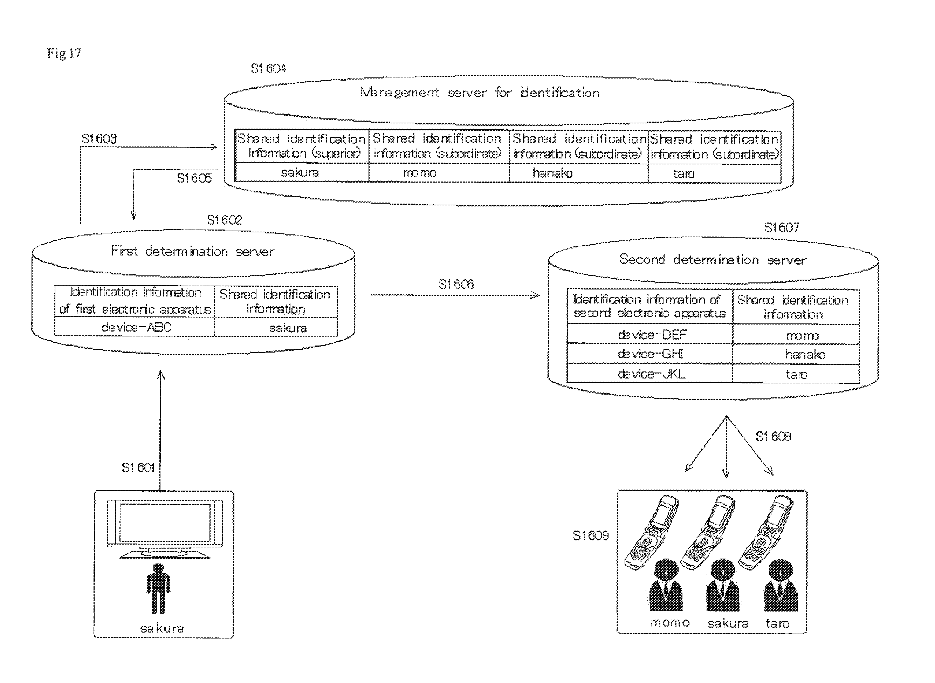

Fig. 16 shows concrete examples of processing of the entire system of the first embodiment. Fig. 17 is a diagram showing the overall processing of the entire system as shown in Fig. 16. In this example, as the usage request, a request for waking-up the second user as the second service via the second determination server is cited. Therefore, in a case of school excursion etc, in order to prevent students from being late, it is possible to simultaneously request for morning-call to the students who have mobile phones from a teacher's digital TV. Thus, the present invention is effective if the case of requesting the same service for a plurality of users. In addition, in such case, information indicating that payment for the service has been charged by the first determination server may be outputted to the second determination server. In the identification and management method of this system, at the outset, in step S1601, a request for waking-up the user who has subordinate-superior relationship is outputted from the first electronic apparatus to the first service server. In this case, 'device-ABC' as the identification information of the first electronic apparatus is simultaneously outputted. Note that as to the step S1601, the process may be carried out via the first service server. Subsequently, in the first determination server, which has received the wake-up request (usage request), the shared identification information of the first user 'sakura' correlated with the identification information of the first electronic apparatus 'device-ABC' is extracted (S1602). Subsequently, based on the usage request, the first proof request including the shared identification information of the first user (sakura) is outputted to the management server for identification (S1603). In step S1603, specifically, a proof request for uniqueness of the shared identification information of the first user (sakura), and for a proof request for subordinate-superior relationship of the second user identified by the shared identification information correlated with sakura are outputted. The management server for identification, which has received the proof request, carries out searching the management unit for identification, which manages the information regarding subordinate-superior relationship between the first user and the second user based on shared identification information for uniquely identifying the user in the system, based on the first proof request outputted by the first determination server. Concretely speaking, the proof generated in step S1604 is proof indicating the uniqueness of the first user, and proof indicating that a user identified by the shared identification information of the first user (here, it is assumed to be 'sakura' for convenience) is 'superior' to a users identified by the shared identification information of the second users (here, it is assumed to be 'momo, hanako, and taro' for convenience), therefore, proof indicating that the first user (sakura) can use the service used by the second users (momo, hanako, and taro) are generated as proof data. In addition, the uniqueness of the second user is also generated as the proof. Hereat, a determination process as to whether the first proof is outputted based on the search result may be carried out.

Subsequently, the first determination server receives first proof including the information regarding subordinate-superior relationship returned from the management server for identification. Based on the received first proof, the wake-up request for the users who have the subordinate-superior relationship with 'sakura' (service request with proof) including the information regarding subordinate-superior relationship ('superior' sakura, 'subordinate' momo, hanako, and taro) is outputted (S1606). The second determination server receives the wake-up request (service request with proof) for the users 'momo', 'hanako', and 'taro'. Note that the second determination server carried out search as to whether the shared identification information of the second users (momo, hanako, and taro) are registered in the second determination server itself (S1607). In S1607, specifically, search of the second storage unit for correlation, in which the shared identification information of the second users (momo, hanako, and taro) and the identification information of the first electronic apparatus (device-DEF, GHI, and JKL) are correlated and stored, is carried out by means of the shared identification information of the second users (momo, hanako, and taro) as a key This search is carried out with respect to each second users.

In the second determination server, the shared identification information of the second users (momo, hanako, and taro) are detected as a result of search of the second storage unit for correlation, so that the wake-up requests to all second electronic apparatuses identified by the identification information of the second electronic apparatuses correlated with the shared identification information are outputted (S1608). Note that the wake-up request may be executed via a server of the second service server group. After that, the wake-up process is executed in the second electronic apparatus, which has received the wake-up request (S1609). In addition, the second determination server may output a notification indicating the user who has received the wake-up request to the first electronic apparatus via the first determination server after outputting the wake-up request to the second electronic apparatus.

### <Configuration for Implementing First Embodiment>

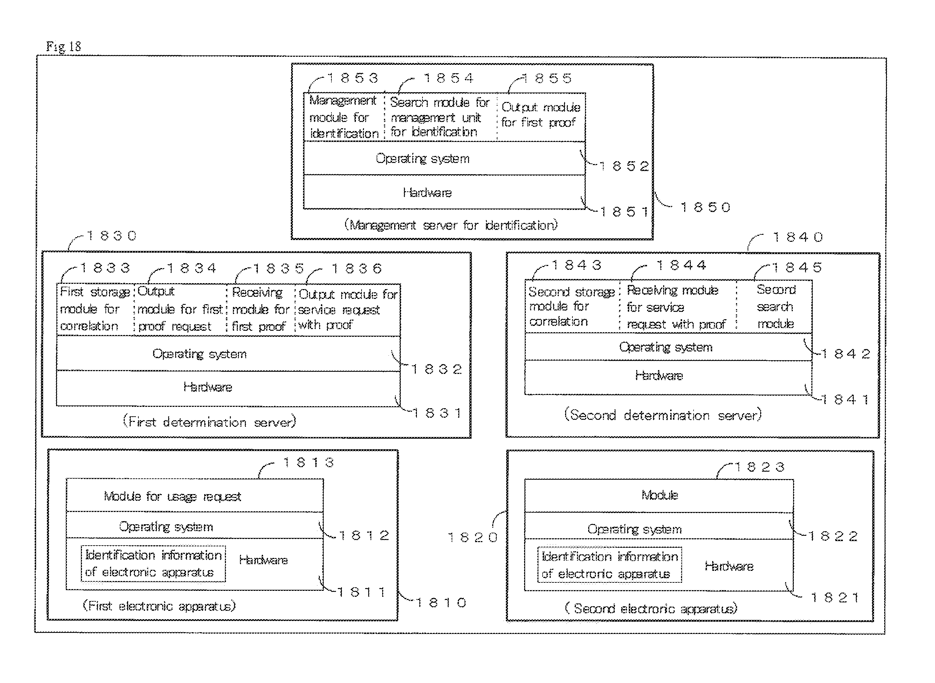

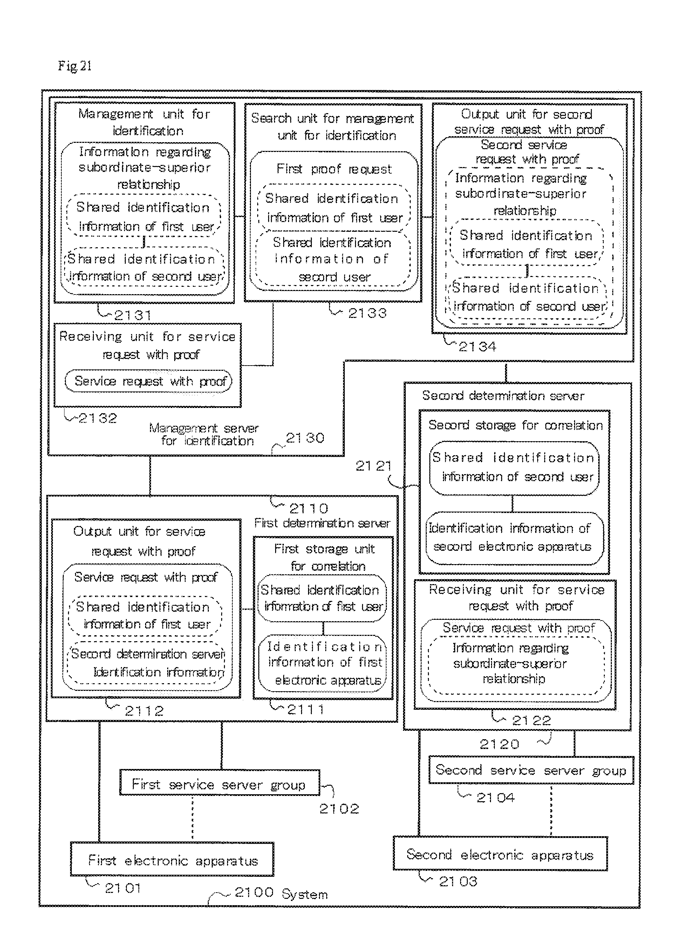

Fig. 18 is a diagram showing an example of configuration for implementing the first embodiment. In Fig. 18, the first determination server (1830) is explained. As shown in Fig. 21, a physical configuration of the first determination server (1830) is implemented by the hardware (1831) configured by a CPU, a memory, a hard disk, an input/output device, a network interface (I/O) etc. Logically speaking, an operating system (1832), basic software for abstraction of functions of the hardware (1831), or for managing operation of the hardware (1831) is operated, and program configured by including modules such as a first storage module for correlation (1833), an output module for first proof request (1834), a receiving module for first proof (1835), and an output module for service request with proof (1836), which are for implementing the first storage unit for correlation (511), the output unit for first proof request (512), the receiving unit for first proof (513), and the output unit for service request with proof (514), is operated on the software. This program executes the processing of Fig. 11, for example.

Note that, as to the second determination server (1840) and the management server for identification (1850), an operating system runs on the hardware, and program including modules for implementing the components is operated thereon, so that it is possible to implement.

Note that, as to the first electronic apparatus (1810) and the second electronic apparatus (1820), similar to the respective servers, an operating system runs on the hardware, and program including modules for implementing the components is operated thereon, so that it is possible to implement. Further, in the electronic apparatus, the identification information of electronic apparatus correlated with the hardware (1811 and 1821) is stored.

### <Brief Description of Effects of First Embodiment>

In the above disclosed system configuration, one electronic apparatus is not bound by one service system, thereby removing boundaries between service systems. For example, the first electronic apparatus used by the first user can receive the service received by the second electronic apparatus used by the second user in the other service system, thereby improving user-friendliness. Moreover, it is possible for the first user to simultaneously request for the same service for all second users who have the subordinate-superior relationship with the first user, thereby improving user-friendliness in the case of plurality of the second users.

### <<Second embodiment>>

### <Concept of Second Embodiment>

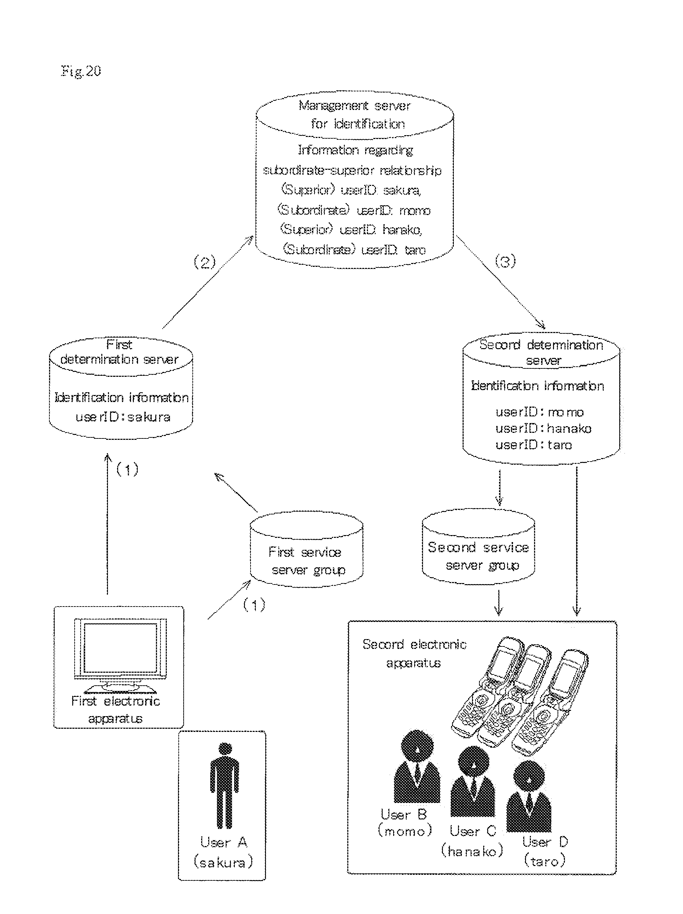

Hereinafter, a second embodiment will be described. Similar to the first embodiment, the second embodiment is a system comprising service server groups, electronic apparatuses, determination servers, and management server for identification. The system is different from that of the first embodiment in that based on a usage request for the second determination server from the first electronic apparatus, the management server for identification, which has received a service request with proof request outputted from the first determination server, carries out a search of a management unit for identification, and outputs the service request with proof to the second determination server. Fig. 20 is a conceptual diagram of a second embodiment. The outline of the processing in Fig. 20 is as follows. Meanings of the respective terms will be described. (1) A usage request for the second determination server is outputted from the first electronic apparatus used by the user A to the first determination server. This usage request may be outputted to the first determination server, or may be sent via the first service server group. (2) The second determination server, which has received the usage request, carries out a service request with proof to the management server for identification. (3) The management server for identification, which has received the service request with proof, outputs the service request with proof to the second determination server identified by the identification information of the second determination server included in the eservice request with proof including the information regarding subordinate-superior relationship based on the shared identification information of the users A included in the service request with proof.

As described above, the second embodiment is different from that of the first embodiment in that based on the usages request for the second determination server from the first electronic apparatus, the first determination server outputs the service request with proof, and the management server for identification receives it and carries out search of the management unit for identification, thereby outputting a service request with proof to the second determination server based on the search result without going through the first determination server.

### <Configuration of Second Embodiment>

Fig. 21 is a functional block diagram of the second embodiment. Similar to the first embodiment, a 'system' (2100) of the second embodiment comprises a first service server group (2101), which provides a first service to a first electronic apparatus (2103) based on a first determination, a second service server group (2102), which provides a second service to a second electronic apparatus (2104) based on a second determination, the first electronic apparatus (2103), which is used by a first user, and receives the first service from the first service server group (2101), the second electronic apparatus (2104), which is used by a second user, and receives the second service from the second service server group (2102), a first determination server (2110), which carries out a first determination of the first electronic apparatus (2103) based on identification information of first electronic apparatus in order to receive the first service from the first service server group (2101), a second determination server (2120), which carries out a second determination of the second electronic apparatus (2104) based on identification information of second electronic apparatus in order to receive the second service from the second service server group (2102), and a management server for identification (2130), in which a management unit for identification (2131) manages information regarding subordinate-superior relationship between the first user and the second user based on shared identification information for uniquely identifying the user in the system.

In the first embodiment, communication between the first determination server (510) and the management server for identification (530) is carried out, and after that, communication between the first determination server (510) and the second determination server (520) is carried out. Meanwhile, in the second embodiment, communication between the first determination server (2310) and the management server for identification (2330) is carried out, and after that, communication between the management server for identification (2330) and the second determination server (2320) is carried out.

### (Configuration of First Determination Server of Second Embodiment)

As shown in Fig. 21, the first determination server (2110) comprises a first storage unit for correlation (2111) and an output unit for first proof request (2112).

The 'first storage unit for correlation' (2111) stores the shared identification information of the first user correlated with the identification information of first electronic apparatus. Therefore, the definition of the first storage unit for correlation (2111) is the same as that of the first storage unit for correlation (511).

The 'output unit for service request with proof request' (2112) outputs a service request with proof request, including the identification information of the second determination server and the shared identification information of the first user, based on a usage request for the second determination server from the first electronic apparatus. The 'identification information of the second determination server' is information for identifying the second determination server. For example, FQDN (Fully Qualified Domain Name) assigned to the second determination server or IP address assigned to the second determination server is cited. In the after-mentioned management server for identification of the second embodiment, a service request is outputted to the second determination server by means of this identification information of the second determination server. Note that the identification information of the second determination server may be information stored in the first determination server, or may be information included in the usage request from the first electronic apparatus. The reason why the information for identifying the second determination server is included in the service request with proof request is that, different from the first embodiment, in the second embodiment, the service request is outputted to the second determination server via the management server for identification. Therefore, the identification information of the second determination server, which is a target of the service request, is necessary for the management server for identification.

The 'output unit for service request with proof request' (2112) carries out an initial process carried out from the first determination server to the exterior in order to implement cross-cutting use of the different independent systems, which is an objective of the present invention. This service request with proof request is outputted to the management server for identification. An example of the usage request of the second determination server includes the case that the first electronic apparatus transmits it in order to request payment of the fee for the first service via the second determination server. Another example of the usage request includes a request for providing the first service to the second electronic apparatus via the second determination server from the first electronic apparatus. Conventionally, the first electronic apparatus can receive service only in the first service system. Meanwhile, in the present invention, it is possible to receive a predetermined service in the other service system across boundaries. Specifically, it is an objective of the present invention to use the second determination server, and it is possible for the first user to receive the service in the other service system used by the second user nonidentical to the first user. Concretely speaking, a request for acquiring a decryption key via the second determination server in order to make encrypted content, downloaded by the second electronic apparatus used by the second user, available to the first electronic apparatus used by the first user, or a request for acquiring a password via the second determination server in order to make personal information (e.g., a schedule or a patient's chart), downloaded by the second electronic apparatus, available to the first electronic apparatus, are cited. In addition, for example, based on the request from the first electronic apparatus, a request for executing the wake-up service as the second service in exchange for the charge to the first electronic apparatus is cited. Moreover, a request for simultaneously acquiring positional information of the second electronic apparatuses by the first electronic apparatus by means of GPS (Gobal Positioning System) function available to the second electronic apparatus is cited. Reiteratively speaking, conventionally, these processes have been impossible for the first electronic apparatus. The reason for this is that the first electronic apparatus can receive service only in the first service system, and these processes are possible only for the second electronic apparatus in the second service system.

When requesting the usage from the first electronic apparatus used by the first user, for example, the identification information of the first electronic apparatus is also outputted to the first determination server, so that the output unit for service request with proof request acquires the shared identification information of the first user based on the identification information of the first electronic apparatus. Additionally, the identification information of the second determination server (e.g., IP address), which is information of the second determination server as the target of the usage request, is acquired.

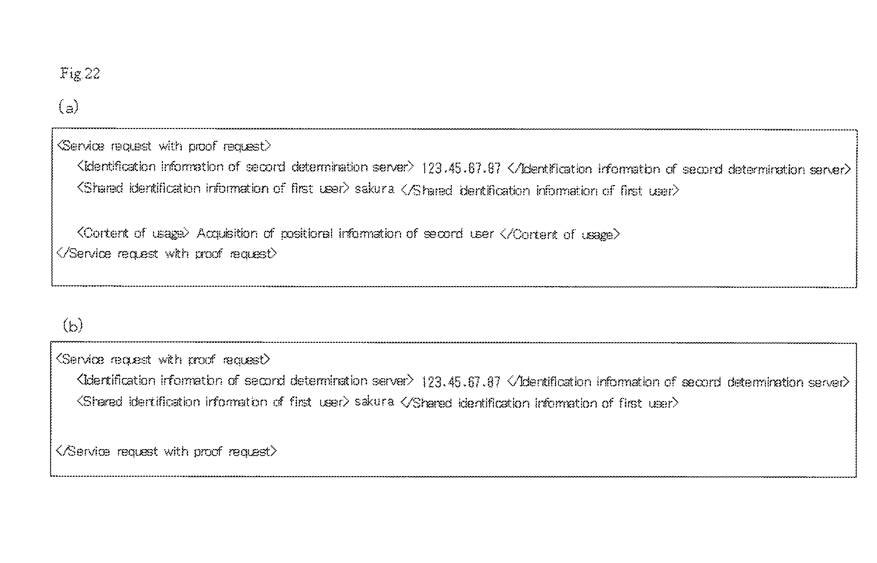

Fig. 22 is a diagram showing an example of a service request with proof request. Fig. 22(a) and 22(b) are different in that the content of usage is described. In Fig. 22, the second determination server is identified by IP address 123,45,67,89, the shared identification information of the first user is expressed as sakura. In addition, as the content of the service request, the information for requesting for acquisition of the positional information of the second user is included. Note that the service request with proof request may include other information such as designation of a server in the second service server group, designation of a service provided by the second service server group, and charging method of a payment for the service.

### (Processing of First Determination Server of Second Embodiment)

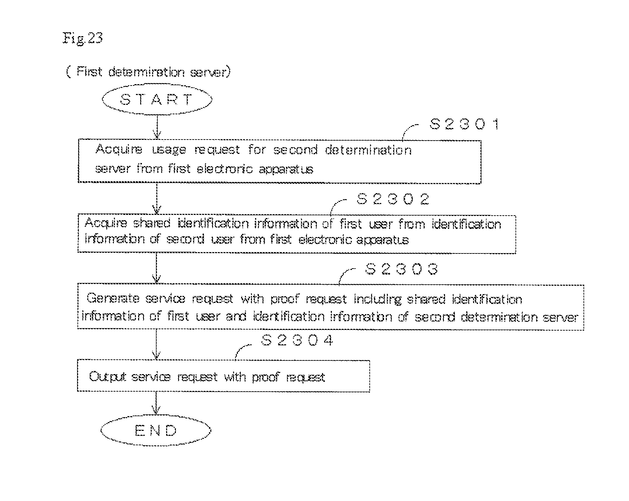

Fig. 23 is a flowchart showing processing of the first determination server of the second embodiment. The first determination server carries out processes in this flowchart every time the acquisition of the usage request for the second determination server from the first electronic apparatus becomes possible. In step S2301, the usage request for the second determination server is acquired from the first electronic apparatus. For example, read system call in communication by means of socket is executed in the output unit for service request with proof request (2112). In step S2302, the shared identification information of the first user is acquired from the identification information of the first electronic apparatus. For example, the identification information of the first electronic apparatus, which has transmitted the usage request in step S2301, is acquired from the information indicating the communication connection, and search of the first storage unit for correlation (2111) etc. is carried out by means of the acquired identification information of the first electronic apparatus, thereby acquiring the shared identification information of the first user.

In step S2303, the service request with proof request including the identification information of the second determination server, the shared identification information of the first user is generated with reference to the information acquired by steps S2301 and S2302. For example, the service request with proof request as shown in Fig. 22 is generated, and is stored in a memory. In step S2304, the service request with proof request is outputted. For example, communication connection with the management server for identification is established, the service request with proof request stored in the memory is read out, and by means of acquired socket, write system call is executed in the output unit for service request with proof request (2112).

### (Configuration of Second Determination Server of Second Embodiment)

As shown in Fig. 21, the second determination server (2120) comprises the second storage unit for correlation (2121), and the receiving unit for service request with proof (2122).

The 'second storage unit for correlation' (2121) stores the shared identification information of the second user correlated with the identification information of second electronic apparatus.

The 'receiving unit for second service request with proof (2122) receives a second service request with proof, including the information regarding subordinate-superior relationship outputted by the management server for identification. The second service request with proof is returned from the management server for identification in the system of the second embodiment based on the service request with proof request outputted by the first determination server. The process in the management server for identification in the system of the second embodiment will be described hereinafter.

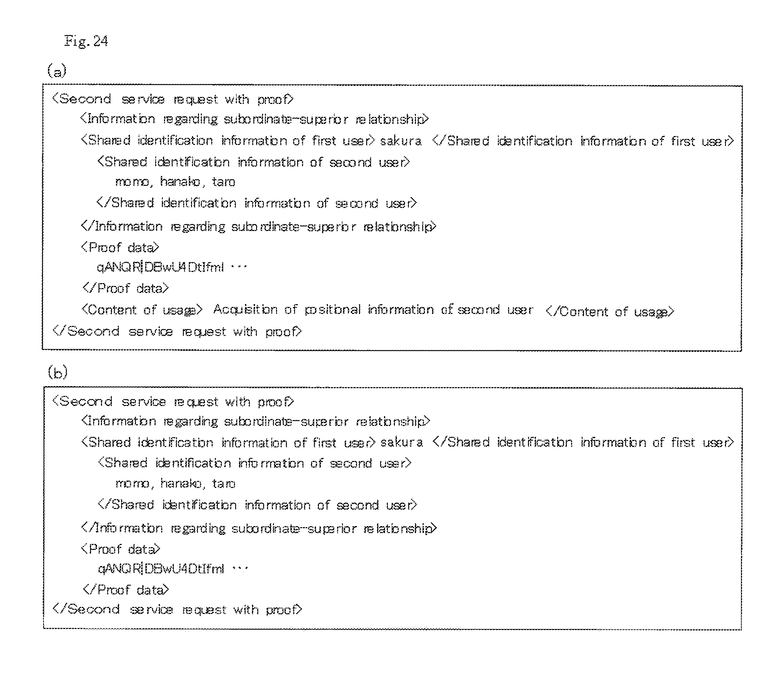

Fig. 24 is a diagram showing an example of a second service request with proof. Fig. 24(a) and 24(b) are different in that the content of usage for the service is described. The second service request with proof as shown in Fig. 24 includes momo, hanako, and taro as the shared identification information of the second users. Therefore, this shows that the request as to the service received by the electronic apparatuses used by the second users identified as momo, hanako, and taro is executed. In addition, between '<proof data>' and '</proof data>', shared identification information or data such as a signature etc. by the management server for identification in order to prove the authenticity of the subordinate-superior relationship is arranged. In addition, the second service request with proof may include other information such as designation of a service provided by the second service server group, and charging method of a payment for the service, and the information proving the authenticity of these information may be arranged between '<proof data>' and '</proof data>'.

In addition, similar to the first embodiment, the second determination server may carry out search by means of the shared identification information of the second user as a key based on the second service request with proof.

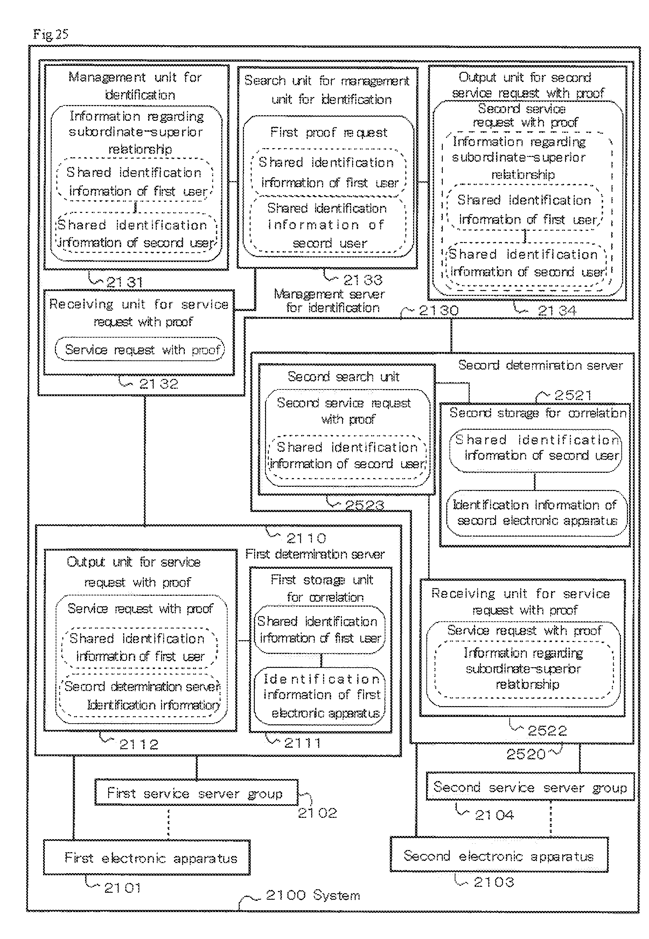

Fig. 25 is a second functional block diagram of the second determination server in cases where the search is carried out by means of the shared identification information of the second user as a key based on the second service request with proof. Comparing Fig. 25 with Fig. 21, the second search unit (2523) is added to the second determination server (2520) of Fig. 25.

The 'second search unit' (2523) searches the second storage unit for correlation (2521) by means of the shared identification information of the second user as a key based on the second service request with proof received from the management server for identification. The search carried out by means of the shared identification information of the second user as a key is a search, in which the shared identification information of the second user, which is indicated by the information regarding subordinate-superior relationship and included in the service request with proof, is extracted, and search as to whether the shared identification information corresponding thereto is stored in the second storage unit for correlation is carried out. If the corresponding shared identification information is acquired, a service in accordance with the service request with proof (e.g., payment of a fee for the first service, transmission of a decryption key of encrypted content etc., or transmission of a password) may be provided. In addition, the search result may be transmitted to the first determination server or to the second electronic apparatus (via the second service server group).

### (Processing of Second Determination Server of Second Embodiment)

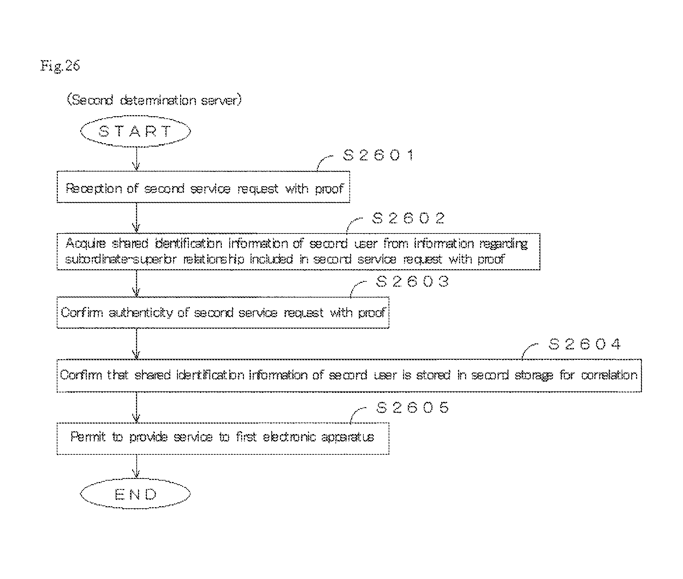

Fig. 26 is a flowchart showing processing of the second determination server of the second embodiment. The second determination server carries out processes in the flowchart of Fig. 26 every time reception of the second service request with proof becomes possible. In step S2601, the second service request with proof including the information regarding subordinate-superior relationship is received. After detecting the availability of reception of the second service request with proof, communication connection with the first determination server is established, so that read system call by means of the acquired socket is executed in the output unit for second service request with proof (2122). In step S2602, the shared identification information of the second user is acquired from the information regarding subordinate-superior relationship included in the second service request with proof received by step S2601. In step S2603, authenticity of the second service request with proof received by step S2601 is confirmed. For example, by means of the public key of the management server for identification, an examination of the signature etc. is carried out. In step S2604, it is confirmed that the shared identification information of the second user acquired by step S2602 is stored in the storage unit for correlation. In accordance with this confirmation, it is possible to confirm that the second user indicated by the information regarding subordinate-superior relationship included in the second service request with proof is the user who uses the second electronic apparatus, which receives the service based on the determination by the second determination server. Therefore, for example, it is possible to acquire the positional information, and to output the information to the first electronic apparatus on the second determination server's side.

### <Configuration of Management Server for Identification of Second Embodiment>

As shown in Fig. 21, the management server for identification (2130) comprises a management unit for identification (2131), a receiving unit for service request with proof request (2132), a search unit for management unit for identification (2133), and an output unit for second service request with proof (2134).

The 'management unit for identification' (2131) manages information regarding subordinate-superior relationship between the first user and of the second user based on shared identification information for uniquely identifying the user in the system. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information in the system is unique. Similarly, the information regarding subordinate-superior relationship based on the shared identification information is assumed to have been preliminarily registered by the user with the management server for identification. Further, the information regarding subordinate-superior relationship between the first and second users is managed based on the shared identification information, so that, for example, it is possible to prove that the first user has a 'subordinate' relationship with the second user.

The 'receiving unit for service request with proof request' (2132) receives the service request with proof request outputted by the first determination server. Note that the service request with proof request may be separately received as proof request and a service request. In this case, for example, the proof request is firstly outputted from the first determination server, and based on this, the management server for identification may search the management unit for identification. The proof as the search result is returned to the first determination server, and the first determination server, which has received this proof, may output the service request.

The 'search unit for management unit for identification' (2133) searches the information regarding subordinate-superior relationship in the management unit for identification by means of the shared identification information of the first user as a key, included in the first proof request outputted by the first determination server. Therefore, the shared identification information of the first user included in the first proof request is extracted, and search as to determine whether a record of the information regarding subordinate-superior relationship corresponding thereto is stored in the management unit for identification is carried out. By this search, based on the shared identification information of the first user, it is possible to prove the uniqueness of the first user in the system, and to prove the subordinate-superior relationship between the first and second users.

Moreover, by means of the shared identification information of the second user, it is possible to prove uniqueness of the second user who has the subordinate-superior relationship in the system

The 'output unit for second service request with proof' (2134) outputs the second service request with proof based on the search result by the search unit for management unit for identification. A destination of outputting the second service request with proof is the second determination server. In cases where the information regarding subordinate-superior relationship including the shared identification information of the first user as a primary key is acquired, it is possible to output proof indicating that the first and second users have the subordinate-superior relationship. Note that, in cases where the shared identification information of the first does not exist as the primary key, but there is a subordinate relationship, the first user does not have 'superior' relationship, so that it becomes unnecessary to output the second service request with proof. In addition, in cases where the shared identification information of user has not been acquired, or in cases where the shared identification information of one user is included in the record, but the shared identification information of another user is not included in the record, error information indicating that may be separately outputted to the first determination server which has requested the service. In addition, the second service request with proof outputted to the second determination server may be encrypted by a private key of the management server for identification. In this case, the second determination server, which receives the second service request with proof, carries out decryption by the public key of the management server for identification, and if the proof is confirmed, it is possible to prevent falsification and impersonation.

Note that the management server for identification may store the identification information of the second determination server, and in this case, by comparing with the identification information of the second determination server included in the service request with proof request, the uniqueness or authenticity etc. of the second determination server may be determined.

### (Processing of Management Server for Identification of Second Embodiment)

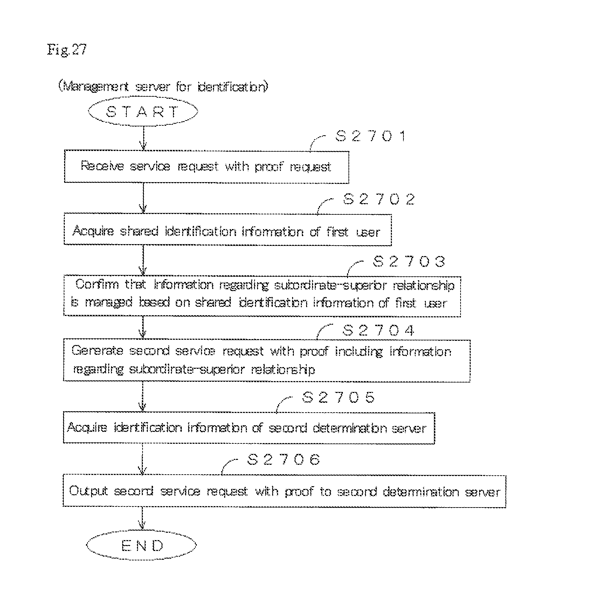

Fig. 27 is a flowchart showing processing of the management server for identification in the system of the second embodiment. The management server for identification carries out processes in this flowchart every time reception of the service request with proof request becomes possible. In step S2701, the service request with proof request is received. In this step, for example, by means of the socket generated in accordance with a request for establishment of the communication connection from the first determination server, read system call is executed in the receiving unit for the service request with proof request (2132) etc. In step S2702, the shared identification information of the first user included in the received service request with proof request is acquired. The acquired result is temporarily stored in a memory, for example. In addition, in this step, the service request included in the service request with proof request is also acquired, and may be temporarily stored in a memory. In step S2703, based on the shared identification information of the first user, it is confirmed that the information regarding subordinate-superior relationship is managed by the management unit for identification (2131). Concretely speaking, search as to presence of the record including the shared identification information of the first user as the primary key is carried out. In step S2704, based on the confirmation of step S2703, the second service request with proof is generated. The generated second service request with proof is temporarily stored in a memory etc. In step S2705, the identification information of the second determination server included in the service request with proof request received in step S2701 is acquired. The acquired identification information of the second determination server is temporarily stored in a memory etc. In step S2706, the second service request with proof generated in step S2704 is outputted to the second determination server. For this step, for example, the communication connection with the second determination server is established by means of the identification information of the second determination server acquired by step S2705, and by means of the socket acquired in this establishment, write system call is executed in the output unit for second service request with proof (2134).

### <Processing of Entire System of Second Embodiment>

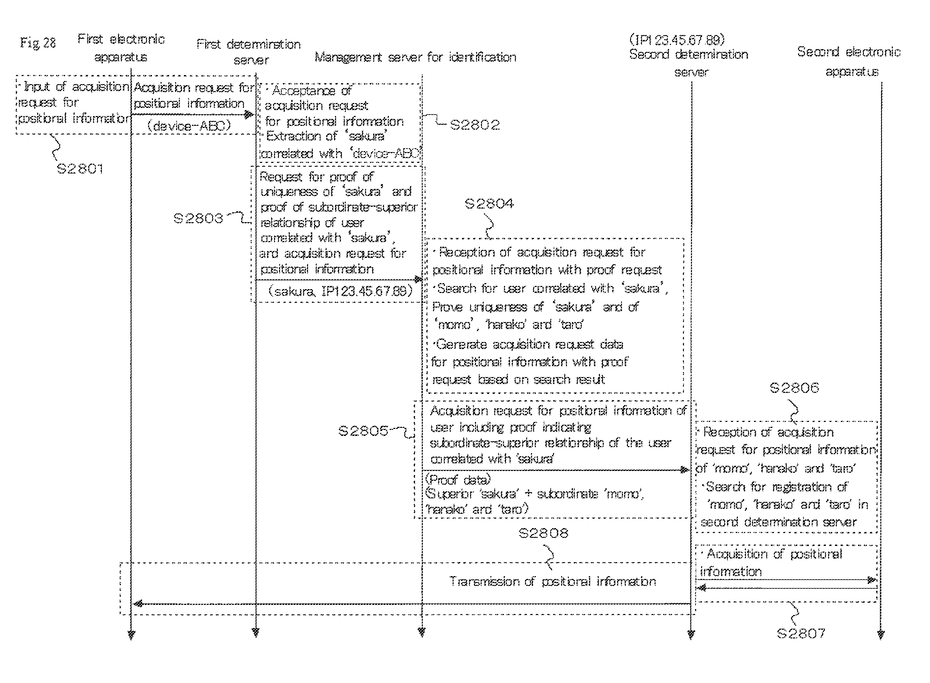

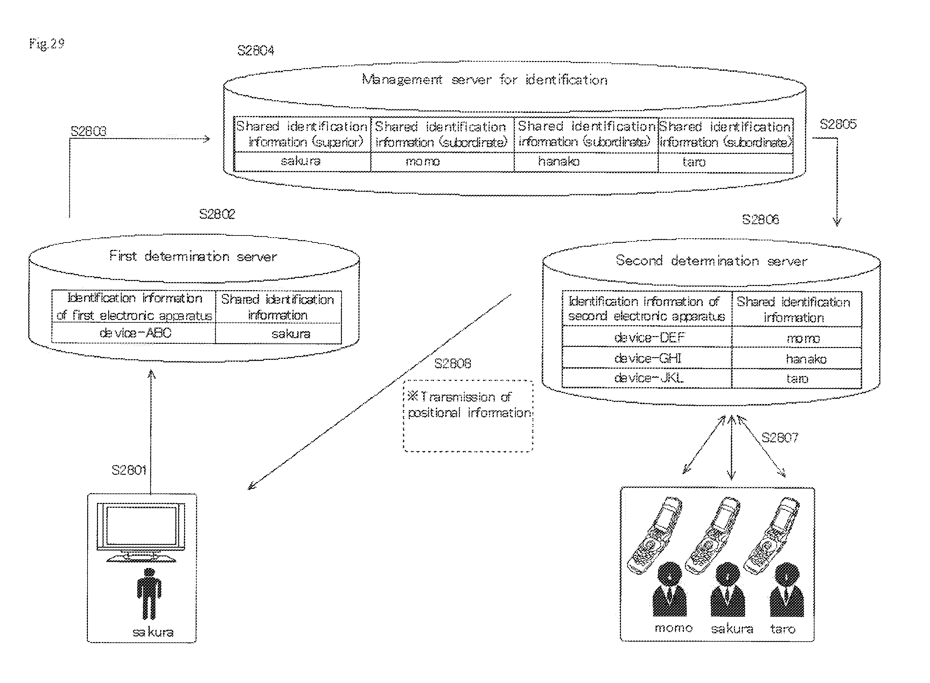

Fig. 28 shows concrete examples of processing of the entire system of the second embodiment. Fig. 29 is a diagram showing the overall processing of the entire system as shown in Fig. 28. In this example, as the usage request, an acquisition request for positional information of the second user via the second determination server in order to make the positional information of the second electronic apparatus used by the second user available to the first electronic apparatus used by the first user is cited. At the outset, in step S2801, the acquisition request for positional information (usage request) is outputted from the first electronic apparatus to the first service server. In this case, 'device-ABC' as the identification information of the first electronic apparatus is simultaneously outputted. Note that as to step S2801, the process may be carried out via the first service server.

Subsequently, in the first determination server, which has received the acquisition request for positional information (usage request), the shared identification information of the first user 'sakura' correlated with the identification information of the first electronic apparatus 'device-ABC' is extracted (S2802). Subsequently, based on the accepted acquisition request for positional information, the service request with proof request including the identification information of the second determination server (IP123.45.67.89) and the shared identification information of the first user (sakura) is outputted to the management server for identification (S2803). In step S2803, specifically, the proof request for subordinate-superior relationship of the second user identified by the shared identification information correlated with sakura is outputted. The management server for identification receives the service request with proof request (acquisition request for positional information with proof request), carries out search of the management unit for identification, which manages the information regarding subordinate-superior relationship, by means of the shared identification information of the first user as a key based on the received service request with proof request. In addition, based on the search result, the second service request with proof including the information regarding subordinate-superior relationship is generated '(S2804) Concretely speaking, the proof generated in step S2804 is proof indicating the uniqueness of the first user, and proof indicating that a user identified by the shared identification information of the first user (here, it is assumed to be 'sakura' for convenience) is 'supeiror' to a users identified by the shared identification information of the second users (here, it is assumed to be 'momo, hanako, and taro' for convenience), therefore, proof indicating that the first user (sakura) can use the service used by the second users (momo, hanako, and taro) are generated as proof data. In addition, the uniqueness of the second user is also generated as the proof. Hereat, a determination process as to whether the first proof is outputted based on the search result may be carried out. Subsequently, acquisition request for positional information with proof request (second service request with proof) including the proof indicating that the users (momo, hanako, and taro) correlated with sakura have the subordinate-superior relationship is outputted from the management server for identification to the second determination server (S2805).

Subsequently, the second determination server receives the second service request with proof request (acquisition request for positional information with proof request) including the information regarding subordinate-superior relationship outputted from the management server for identification. Note that the second determination server carried out search as to whether the shared identification information of the second users (momo, hanako, and taro) are registered in the second determination server itself (S2806). In S2806, specifically, search of the second storage unit for correlation, in which the shared identification information of the second users (momo, hanako, and taro) and the identification information of the first electronic apparatus (device-DEF, GHI, and JKL) are correlated and stored, is carried out by means of the shared identification information of the second users (momo, hanako, and taro) as a key This search is carried out with respect to each second users.

In the second determination server, the shared identification information of the second users (momo, hanako, and taro) are detected as a result of search of the second storage unit for correlation, so that the acquisition request for positional information is outputted to all second electronic apparatuses identified by the identification information of the second electronic apparatus correlated with the shared identification information, thereby acquiring the positional information of the second electronic apparatus (S2807). Note that the acquisition request for positional information may be executed via a server of the second service server group. After that, the second determination server may output the acquired positional information to the first electronic apparatus (S2808). Note that the transmission of the positional information in S2808 may be carried out via the first determination server.

### <Configuration for Implementing Second Embodiment>

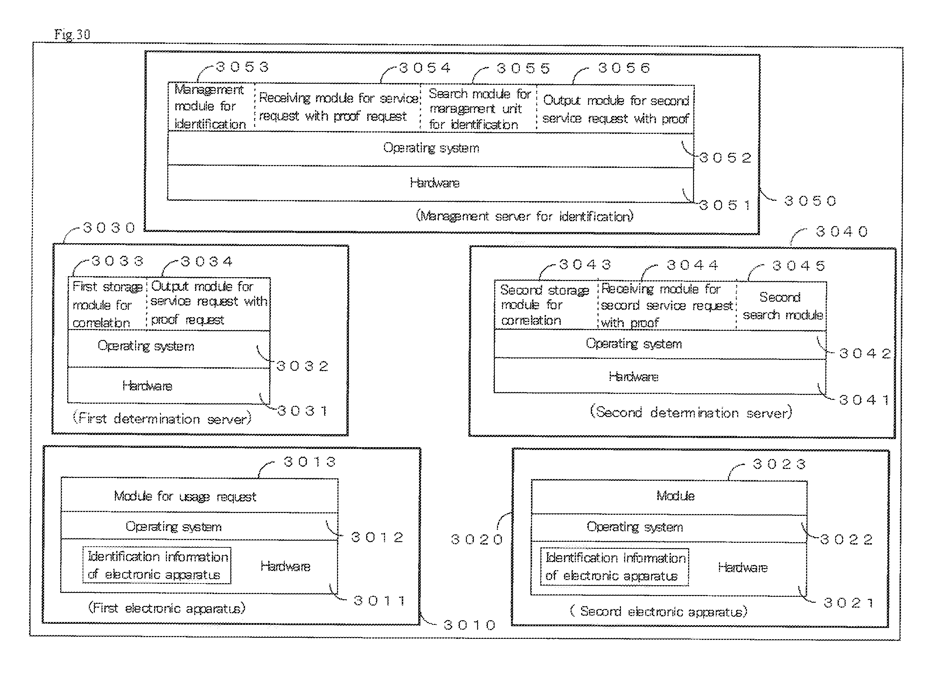

Fig. 30 is a diagram showing an example of configuration for implementing the second embodiment. In Fig. 30, the management server for identification (3050) is explained. As shown in Fig. 30, a physical configuration of the management server for identification (3050) is implemented by the hardware (3050) configured by a CPU, a memory, a hard disk, an input/output device, a network interface (I/O) etc. Logically speaking, an operating system (3052), basic software for abstraction of functions of the hardware (3051), or for managing operation of the hardware (3051) is operated, and program configured by including modules such as a management module for identification (3053), a receiving module for service request with proof request (3054), a search module for management unit for identification (3055), and an output module for second service request with proof (3056), which are for implementing the management unit for identification (2131), the receiving unit for service request with proof request (2132), the search unit for management unit for identification (2133), and the output unit for second service request with proof (2134), respectively, is operated in the software. This program executes the processing of Fig. 27, for example.

Note that, as to the first determination server (3030) and the second determination server (3040), an operating system runs on the hardware, and program including modules for implementing the components is operated thereon, so that it is possible to implement. Note that, as to the first electronic apparatus (3010) and the second electronic apparatus (3020), similar to the respective servers, an operating system runs on the hardware, and program including modules for implementing the components is operated thereon, so that it is possible to implement. Further, in the electronic apparatus, the identification information of electronic apparatus correlated with the hardware (3011 and 302 1) is stored.

### <Brief Description of Effects of Second Embodiment>

This embodiment is, similar to the first embodiment, configured by the service server group, the electronic apparatus, the determination server, and the management server for identification. However, the embodiment is different from the first embodiment in that the management server for identification, which has received a service request with proof request outputted from the first determination server, carries out a search of a management unit for identification, and the management server for identification outputs the service request with proof to the second determination server. In the above configuration, the management of user identification is carried out by incorporating a vertical-integrated system including the first electronic apparatus, the first service server, and the first determination server, with another vertical-integrated system, thereby flexibly providing service. In this case, the service request with proof is given from the management server for identification, so that it is possible to establish reliability, which is enough to provide service, even if there is no relation between the determination servers. Moreover, it is possible for the first user to simultaneously request for the same service for all second users who have the subordinate-superior relationship with the first user, thereby improving user-friendliness in the case of plurality of the second users.

### <<Third embodiment>>

### <Concept of Third Embodiment>

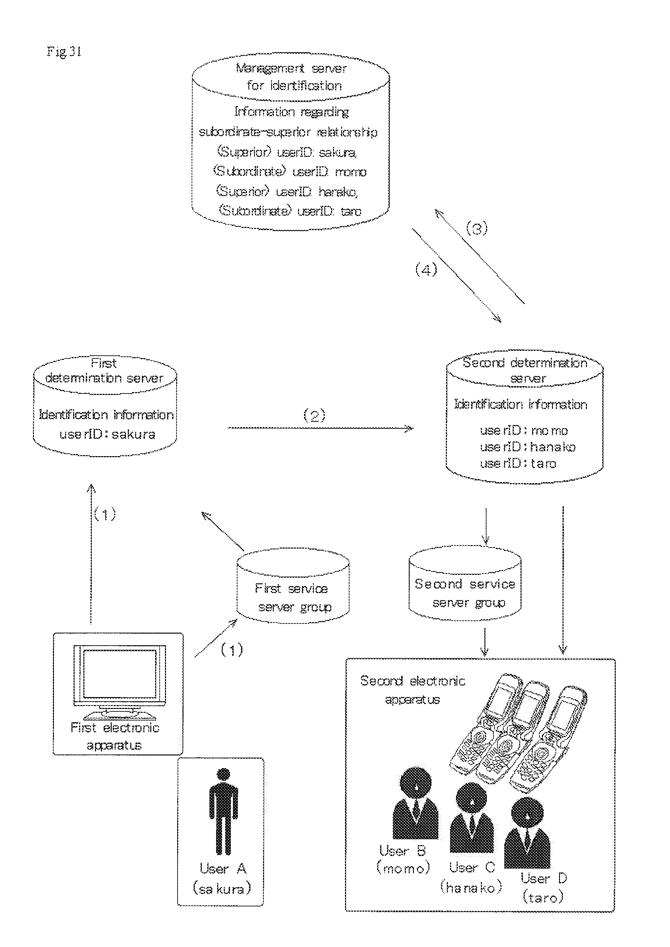

Hereinafter, a third embodiment will be described. Similar to the first embodiment, the third embodiment is a system comprising service server groups, electronic apparatuses, determination servers, and management server for identification. The system is different in that the second determination server, which has received the first service request directly from the first determination server, outputs the second proof request to the management server for identification, and the management server for identification, which has received the second service request, carries out a search of a management unit for identification, and outputs the proof to the second determination server based on the search result. Fig. 31 is a conceptual diagram of a third embodiment. The outline of the processing in Fig. 31 is as follows. Meanings of the respective terms will be described in the latter part. (1) A usage request for the second determination server including the shared identification information of the user B is outputted from the first electronic apparatus used by the user A to the first determination server. This usage request may be outputted to the first determination server, or may be outputted via the first service server group. (2) The first determination server, which has received the usage request, outputs a first service request to the second determination server. (3) The second determination server, which has received the first service request, outputs the second proof request to the management server for identification. (4) The management server for identification, which has received the second proof request, outputs the second proof including the information regarding subordinate-superior relationship based on the shared identification information of the user A included in the second proof request. Therefore, the second determination server, which has received the second proof, can provide a service to the first electronic apparatus based on the authenticity of the service request from the first determination server.

### <Configuration of Third Embodiment>

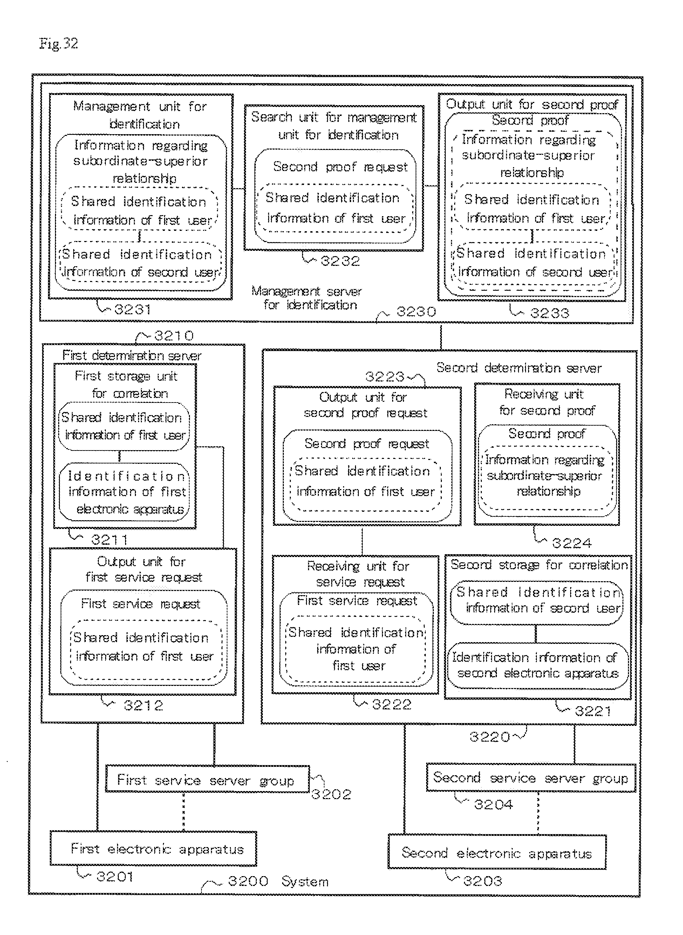

Fig. 32 is a functional block diagram of the second embodiment. Similar to the first embodiment, a 'system' (3200) of the third embodiment comprises a first service server group (3201), which provides a first service to a first electronic apparatus (3203) based on a first determination, a second service server group (3202), which provides a second service to a second electronic apparatus (3204) based on a second determination, the first electronic apparatus (3203), which is used by a first user, and receives the first service from the first service server group (3201), the second electronic apparatus (3204), which is used by a second user, and receives the second service from the second service server group (3202), a first determination server (3210), which carries out a first determination of the first electronic apparatus (3203) based on identification information of first electronic apparatus in order to receive the first service from the first service server group (3201), a second determination server (3220), which carries out a second determination of the second electronic apparatus (3204) based on identification information of second electronic apparatus in order to receive the second service from the second service server group (3202), and a management server for identification (3230), in which a management unit for identification (3231) manages information regarding subordinate-superior relationship between the first user and the second user based on shared identification information for uniquely identifying the user in the system.

In the first embodiment, communication between the first determination server (510) and the management server for identification (530) is carried out, and after that, communication between the first determination server (510) and the second determination server (520) is carried out. Meanwhile, in the third embodiment, communication between the first determination server (3210) and the second determination server (3220) is carried out, and after that, communication between the second determination server (3220) and the management server for identification (3230) is carried out.

### (Configuration of First Determination Server of Third Embodiment)

As shown in Fig. 32, the first determination server (32 10) comprises a first storage unit for correlation (3211) and an output unit for first proof request (3212).

The 'first storage unit for correlation' (3211) stores the shared identification information of the first user correlated with the identification information of first electronic apparatus. Therefore, the definition of the first storage unit for correlation (3211) is the same as that of the first storage unit for correlation (511).

The 'output unit for first service request' (3212) outputs a first service request including the shared identification information of the first user based on a usage request for the second determination server from the first electronic apparatus. A destination of the first service request is the second determination server.

The 'output unit for first service request' (3212) carries out an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries. Specifically, it is an objective of the present invention to use the second determination server, and it is possible for the first user to receive the service in the other service system used by the second user nonidentical to the first user. Concretely speaking, a request for acquiring a decryption key via the second determination server in order to make encrypted content, downloaded by the second electronic apparatus used by the second user, available to the first electronic apparatus used by the first user, or a request for acquiring a password via the second determination server in order to make personal information (e.g., a schedule or a patient's chart), downloaded by the second electronic apparatus, available to the first electronic apparatus, are cited. Reiteratively speaking, conventionally, these processes have been impossible for the first electronic apparatus. The reason for this is that the first electronic apparatus can receive service only in the first service system, and these processes are possible only for the second electronic apparatus in the second service system. The 'output unit for service request with proof request' (3212) carries out an initial process carried out from the first determination server to the exterior in order to implement cross-cutting use of the different independent systems, which is an objective of the present invention. This service request with proof request is outputted to the management server for identification. An example of the usage request of the second determination server includes the case that the first electronic apparatus transmits it in order to request payment of the fee for the first service via the second determination server. Another example of the usage request includes a request for providing the first service to the second electronic apparatus via the second determination server from the first electronic apparatus. Conventionally, the first electronic apparatus can receive service only in the first service system. Meanwhile, in the present invention, it is possible to receive a predetermined service in the other service system across boundaries. Specifically, it is an objective of the present invention to use the second determination server, and it is possible for the first user to receive the service in the other service system used by the second user nonidentical to the first user. Concretely speaking, a request for acquiring a decryption key via the second determination server in order to make encrypted content, downloaded by the second electronic apparatus used by the second user, available to the first electronic apparatus used by the first user, or a request for acquiring a password via the second determination server in order to make personal information (e.g., a schedule or a patient's chart), downloaded by the second electronic apparatus, available to the first electronic apparatus, are cited. In addition, for example, based on the request from the first electronic apparatus, a request for executing the wake-up service as the second service in exchange for the charge to the first electronic apparatus is cited. Moreover, a request for simultaneously acquiring positional information of the second electronic apparatuses by the first electronic apparatus by means of GPS (Global Positioning System) function available to the second electronic apparatus is cited. Reiteratively speaking, conventionally, these processes have been impossible for the first electronic apparatus. The reason for this is that the first electronic apparatus can receive service only in the first service system, and these processes are possible only for the second electronic apparatus in the second service system.

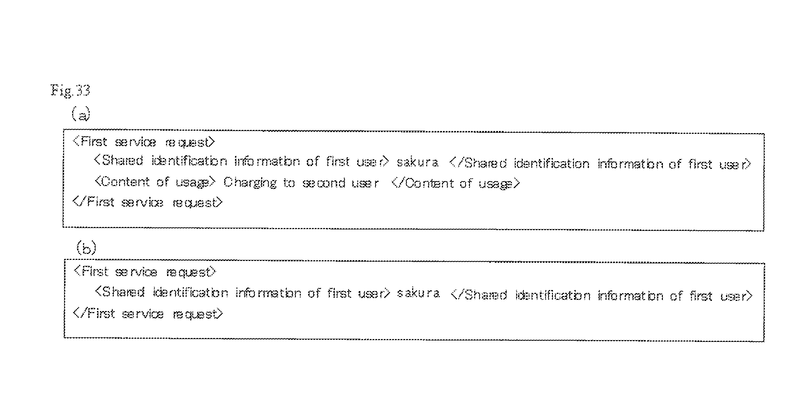

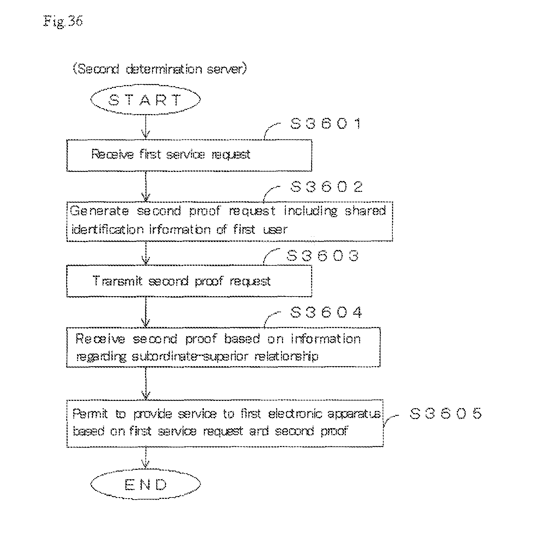

Fig. 33 is a diagram showing an example of the first service request. Fig. 33(a) and 33(b) are different in that the content of usage is described. In Fig. 33, the shared identification information of the first user (sakura) as the information for identifying a sender of service request is included. In addition, the charge request for the second user as shown in Fig. 33(a), the first service request may include the service content of the second service server group. Note that, not indicated in Fig. 36, the service request with proof request may include other information such as designation of a server in the second service server group, designation of a service provided by the second service server group, and charging method of a payment for the service. In addition, a request for causing the management server for identification to confirm subordinate-superior relationship between the first and second users to the second determination server may be included.

### (Processing of First Determination Server of Third Embodiment)

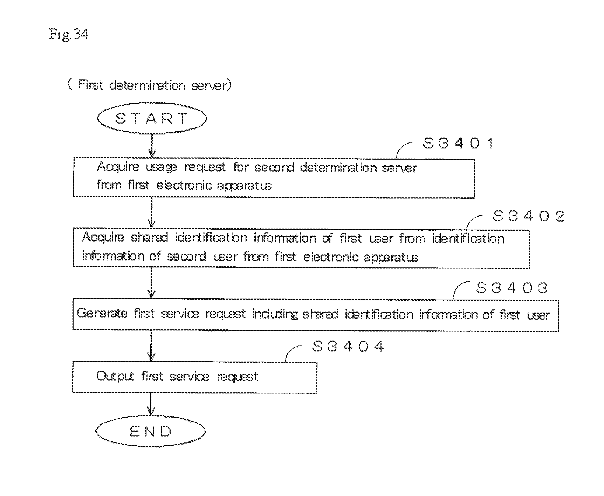

Fig. 34 is a flowchart showing processing of the first determination server of the third embodiment. The first determination server carries out processes in this flowchart each time the acquisition of the usage request for the second determination server from the first electronic apparatus becomes possible. In step S3401, the usage request for the second determination server is acquired from the first electronic apparatus. For example, read system call in communication by means of socket is executed in the output unit for first service request (3212). In step S3402, the shared identification information of the first user is acquired from the identification information of the first electronic apparatus. For example, the identification information of the first electronic apparatus, which has transmitted the usage request in step S3401, is acquired from the information indicating the communication connection, and search of the first storage unit for correlation (3211) etc. is carried out by means of the acquired identification information of the first electronic apparatus, thereby acquiring the shared identification information of the first user.

In step S3403, the first service request including, the shared identification information of the first user is generated with preference to the information acquired by step S3401 and S3402. For example, the generated first service request may be temporarily stored in a memory. In step S3404, the first service request is outputted. For example, communication connection with the second determination server is established, the first service request stored in the memory is read out, and by means of acquired socket, write system call is executed in the output unit for first service request (3212). The first service request is outputted to the second determination server.

### (Configuration of Second Determination Server of Third Embodiment)

As shown in Fig. 32, the second determination server (3220) comprises the second storage unit for correlation (3221), the receiving unit for service request (3222), the output unit for second proof request (3223), and the receiving unit for second proof (3224).

The 'second storage unit for correlation' (3221) stores the shared identification information of second the user correlated with the identification information of second electronic apparatus.

The 'receiving unit for service request' (3222) receives a first service request outputted from the first determination server. The received first service request includes the shared identification information of the first user, but does not include the shared identification information of the second user. Further, the proof for confirming that the subordinate-superior relationship between the users identified by the shared identification information of the first user and of the second user is not added to the received first service request. Accordingly, the service cannot be immediately provided at the point of the reception of the first service request.

The 'output unit for second proof request' (3223) outputs a second proof request including the shared identification information of the first user based on the first service request received by the receiving unit for service request. (3222). A destination of the second proof request is the management server for identification.

The first proof request is outputted in order to acquire a proof indicating uniqueness of the first user identified by the shared identification information, a proof indicating uniqueness of the second user who has subordinate-superior relationship with the first user (including proof of uniqueness of each second user of a plurality of the second users. The same applies throughout this specification), and a proof indicating that the first user can use the service etc. used by the second user from the management server for identification. The second proof request includes the shared identification information of the first user, and may further include information for identifying the first determination server.

As an example of the second proof request, a case acquired by replacing the two 'first proof requests' of Fig. 9 to 'second proof requests' is cited.

The 'receiving unit for second proof' (3224) receives a second proof including the information regarding subordinate-superior relationship outputted by the management server for identification based on the second proof request outputted from the output unit for second proof request (3223). The processing in the management server for identification will be described hereinafter. The second proof includes information for proving the subordinate-superior relationship based on the shared identification information of the first and of the second user included in the second proof request. Accordingly, information proving that the user identified by the shared identification information of the first user is 'superior' to the user identified by the shared identification information of the second user, therefore, information proving that the user can receive the service used by the second user is included. In addition, in cases where the second proof outputted from the management server for identification is encrypted by the secret key of the management server for identification, the second determination server can decrypt by the public key of the management server for identification, and can confirm the content of proof.

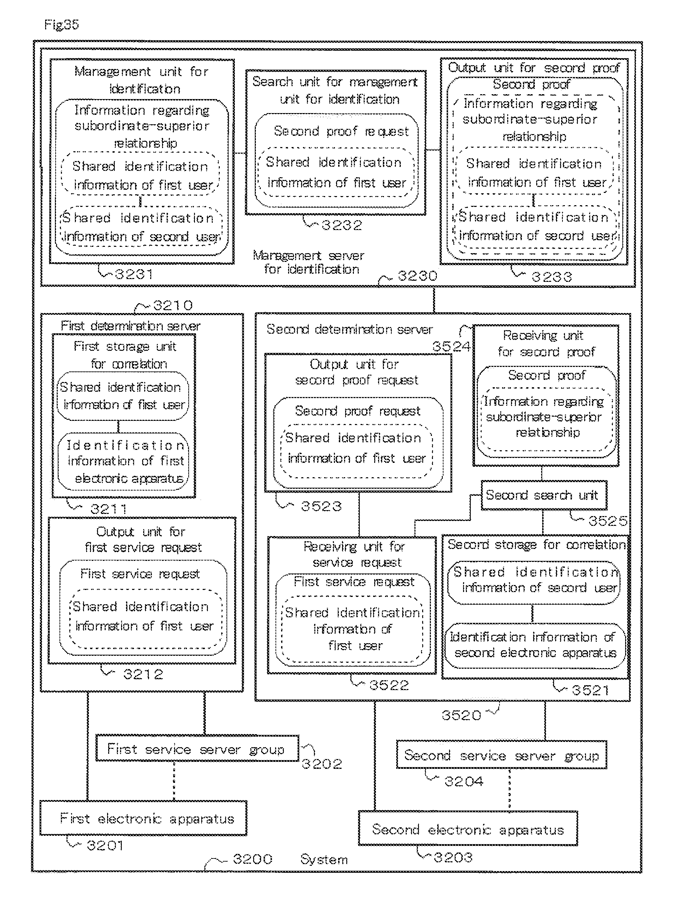

Fig. 35 is a functional block diagram of the second determination server in cases where the search is carried out by means of the shared identification information of the second user as a key based on the second proof. Comparing Fig. 32 with Fig. 35, the second search unit (3525) is added to the second determination server (3520) of Fig. 35.

The 'second search unit' (3525) searches the second storage unit for correlation (3521) by means of the shared identification information of the second user as a key based on the first service request received by the receiving unit for service request, and on the second proof received by the receiving unit for second proof. The search carried out by means of the shared identification information of the second user as a key is a search, in which the shared identification information of the second user included in the second proof is extracted, and search as to whether the shared identification information corresponding thereto is stored in the second storage unit for correlation is carried out. If the corresponding shared identification information is acquired, a service in accordance with the first service request (e.g., execution of wake-up service, acquisition of positional information, payment of a fee for the first service, transmission of a decryption key of encrypted content etc., or transmission of a password) may be provided. In addition, the search result may be transmitted to the first determination server or to the second electronic apparatus (via the second service server group).

### (Processing of Second Determination Server of Third Embodiment)

Fig. 36 is a flowchart showing processing of the second determination server of the third embodiment. The second determination server carries out processes in the flowchart of Fig. 36 every time reception of the first service request becomes possible. In step S3601, the first service request is received. After detecting the availability of reception of the first service request, communication connection with the first determination server is established, so that read system call by means of the acquired socket is executed in the receiving unit for first service request (3222). In step S3602, the second proof request including the shared identification information of the first user is generated. This generation is carried out based on the content of the first service request received in step S3601. The generated second proof request is temporarily stored in a memory etc., for example. In step S3603, the second proof request is transmitted. This transmission is carried out by a establishing communication connection with the first determination server, and executing write system call in the output unit for second proof request (3223) by means of the socket acquired by the establishment. In step S3604, the second proof including subordinate-superior relationship is received. This reception is carried out by executing read system call in the receiving unit for second proof request (3224) by means of the socket. In step S3605, provision of the service to the first electronic apparatus is permitted based on the first service request received by step S3601 and on the second proof received by step S3604

### <Configuration of Management Server for Identification of Third Embodiment>

As shown in Fig. 32, the management server for identification (3230) comprises a management unit for identification (3231), a search unit for management unit for identification (3232), and an output unit for second proof (3233).

The 'management unit for identification' (3231) is the same as that of the first embodiment.

The 'search unit for management unit for identification' (3232) searches the information regarding subordinate-superior relationship in the management unit for identification (3231) by means of the shared identification information of the first user as a key, included in the second proof request outputted by the second determination server. Therefore the shared identification information of the first user included in the first proof request is extracted, and search as to whether a record of the information regarding subordinate-superior relationship corresponding thereto is stored in the management unit for identification is carried out. By this search, based on the shared identification information of the first and the second users, it is possible to prove the uniqueness of each user in the system, and to prove the subordinate-superior relationship between the first and second users. Moreover, by means of the shared identification information of the second user, it is possible to prove uniqueness of the second user who has the subordinate-superior relationship in the system

The 'output unit for first proof' (3233) outputs the second proof based on a search result by the search unit for management unit for identification. A destination of outputting the second proof is the second determination server. In cases where the information regarding subordinate-superior relationship including the shared identification information of the first user as a primary key is acquired, it is possible to output proof indicating that the first and second users have the subordinate-superior relationship. Note that, in cases where the shared identification information of the first does not exist as the primary key, but there is a subordinate relationship, the first user does not have 'superior' relationship, so that it becomes unnecessary to output the second proof. In addition, in cases where the shared identification information of user has not been acquired, error information indicating that may be separately outputted. In addition, the second proof outputted to the second determination server may be encrypted by a private key of the management server for identification. In this case, the second determination server, which receives the second proof, carries out decryption by the public key of the management server for identification, and if the proof is confirmed, it is possible to prevent falsification and impersonation.

### (Processing of Management Server for Identification of Third Embodiment)

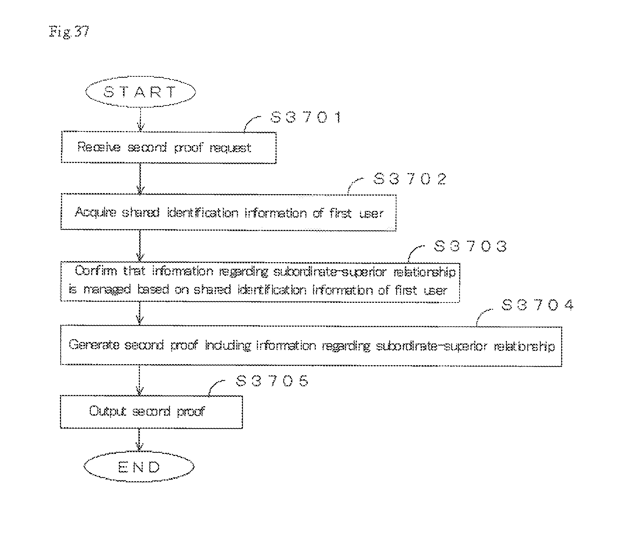

Fig. 37 is a flowchart showing processing of the management server for identification in the system of the third embodiment. The management server for identification carries out processes in this flowchart every time reception of the second proof request becomes possible. In step S3701, the second proof request is received. In this step, for example, by means of the socket generated in accordance with a request for establishment of the communication connection from the first determination server, read system call is executed in the search unit for management unit for identification (3232). In step S3702, the shared identification information of the first user included in the received second proof request is acquired. The acquired result is temporarily stored in a memory. In step S3703, based on the shared identification information of the first user and of the second user, it is confirmed that the information regarding subordinate-superior relationship is managed. Concretely speaking, search as to presence of the record including the shared identification information of the first user as the primary key is carried out. In step S3704, based on the confirmation of step S3703, the second proof including the information regarding subordinate-superior relationship is generated. The generated second proof is temporarily stored in a memory etc. In step S3705, the second proof generated in step S3704 is outputted to the second determination server. In this step, for example, write system call is executed in the output unit for second proof (3233) by means of the communication connection established in step S3701.

### <Processing of Entire System of Third Embodiment>

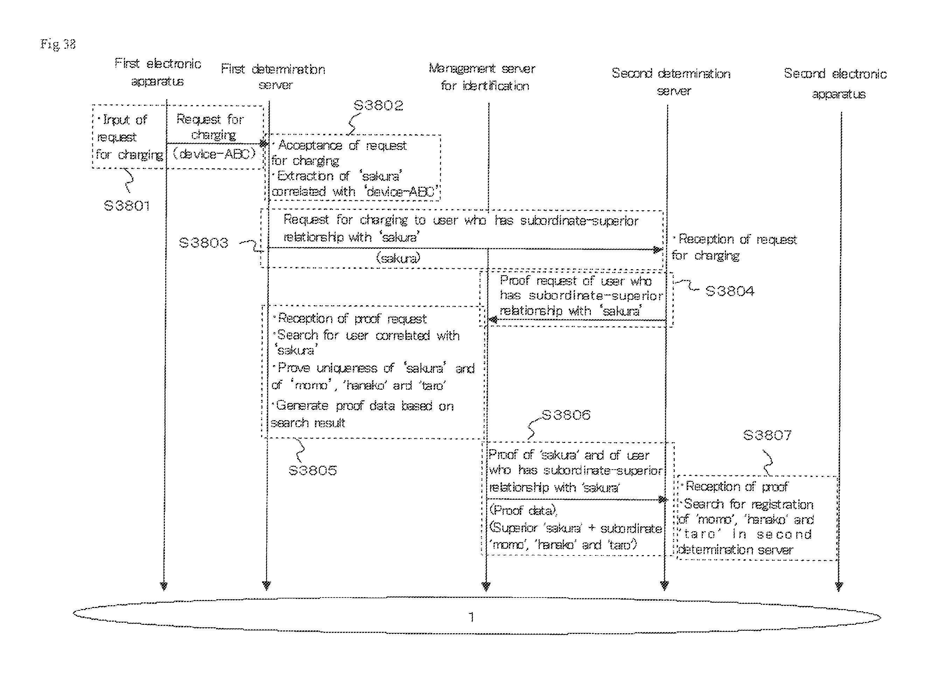

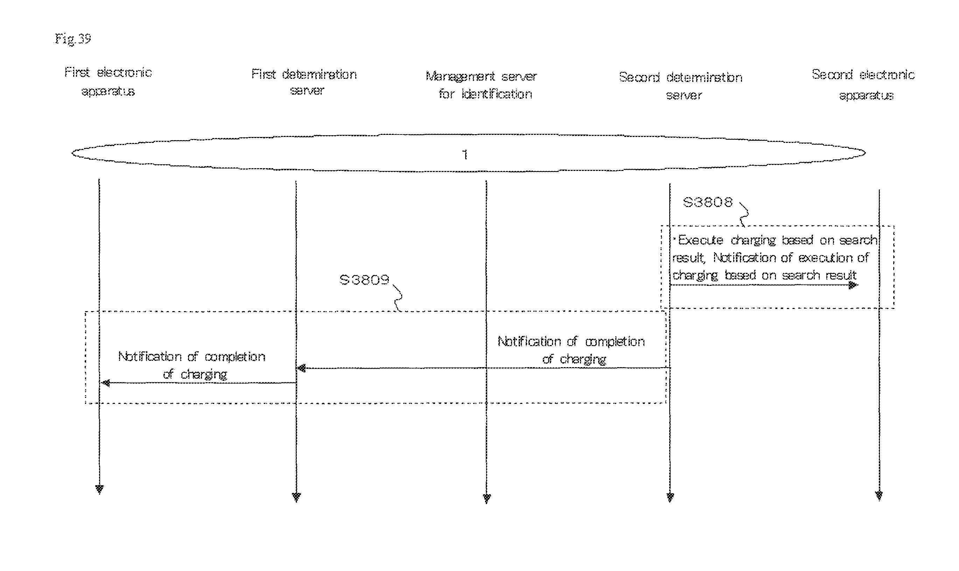

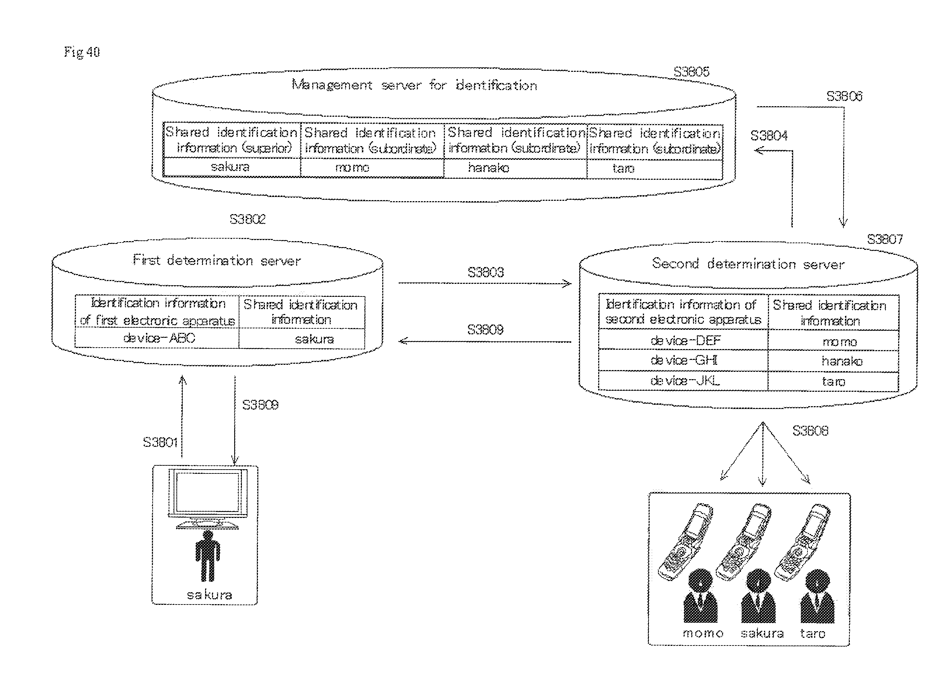

Figs. 38 and 39 show concrete examples of processing of the entire system of the third embodiment. Fig. 40 is a diagram showing overall processing of the entire system as shown in Figs. 38 and 39. In this example, as the usage request, a request for payment of fee for the first service via the second determination server is cited. For example, it is assumed that, from the electronic apparatus for fee collection, which belongs to the first service server group for collecting tax or national pension etc., charge of the above tax etc. is executed by being added to charge of calling rate for mobile phone etc. Therefore, for the second user delinquent in payment of tax etc., it is convenient to pay the tax etc. easily, and party of collecting tax etc. can expect that the second user, who does not wish to stop the second service he uses, pays the delinquent payment. In this system, at the outset, in step S3801, a charge request to the user who has subordinate-superior relationship is outputted from the first electronic apparatus to the first service server. In this case, 'device-ABC' as the identification information of the first electronic apparatus is simultaneously outputted. Note that as to the step S3801, the process may be carried out via the first service server. Subsequently, in the first determination server, which has received the charge request (usage request), the shared identification information of the first user 'sakura' correlated with the identification information of the first electronic apparatus 'device-ABC' is extracted (S3802). Subsequently, based on the usage request, the first determination server outputs the first proof request including the shared identification information of the first user (sakura) (S3803). In the step S3803, specifically, the charge request (first service request) to the second user, who has subordinate-superior relationship with the shared identification information of the first user (sakura), is outputted.

In response to this, the second determinations server receives the first service request outputted from the first determination server, and outputs the second proof request including the shared identification information of the first user (sakura) to the management server for identification (S3804). In response to this, the management server for identification, which has received the proof request, carries out search of the management unit for identification, which manages the information regarding subordinate-superior relationship, by means of the shared identification information of the first user (sakura) as a key, and generates the second proof including the information regarding subordinate-superior relationship based on the search result (S3805). Concretely speaking, the proof generated in the step S3805 is proof indicating the uniqueness of the first user, and proof indicating that a user identified by the shared identification information of the first user (here, it is assumed to be 'sakura' for convenience) is 'supeiror' to a users identified by the shared identification information of the second users (here, it is assumed to be 'momo, hanako, and taro' for convenience), therefore, proof indicating that the first user (sakura) can use the service used by the second users (momo, hanako, and taro) are generated as proof data. In addition, the uniqueness of the second user is also generated as the proof. Hereat, a determination process as to whether the first proof is outputted based on the search result may be carried out. Subsequently, the generated second proof including the information regarding subordinate-superior relationship is outputted from the management server for identification to the second determination server (S3806).

Subsequently, the second determination server receives the second proof outputted from the management server for identification. Subsequently, the second determination server carried out search as to whether the shared identification information of the second users (momo, hanako, and taro) is registered in the second determination server itself (S3807). In S3807, specifically, search of the second storage unit for correlation, in which the shared identification information of the second users (momo, hanako, and taro) and the identification information of the first electronic apparatus (device-DEF, GHI, and JKL) are correlated and stored, is carried out by means of the shared identification information of the second users (momo, hanako, and taro) as a key This search is carried out with respect to each second users.

In the second determination server, the shared identification information of the second users (momo, hanako, and taro) are detected as a result of search of the second storage unit for correlation, so that the charge to all second electronic apparatuses identified by the identification information of the second electronic apparatus correlated with the shared identification information is executed, and notification of the execution of charge is outputted to the second electronic apparatus (S3808). Note that the second determination server outputs the notification of the execution of charge via the first determination server after execution of the charge (S3809). In S3809, the notification may be outputted via the management server for identification, or may be outputted directly to the first electronic apparatus.

### <Configuration for Implementing Third Embodiment>

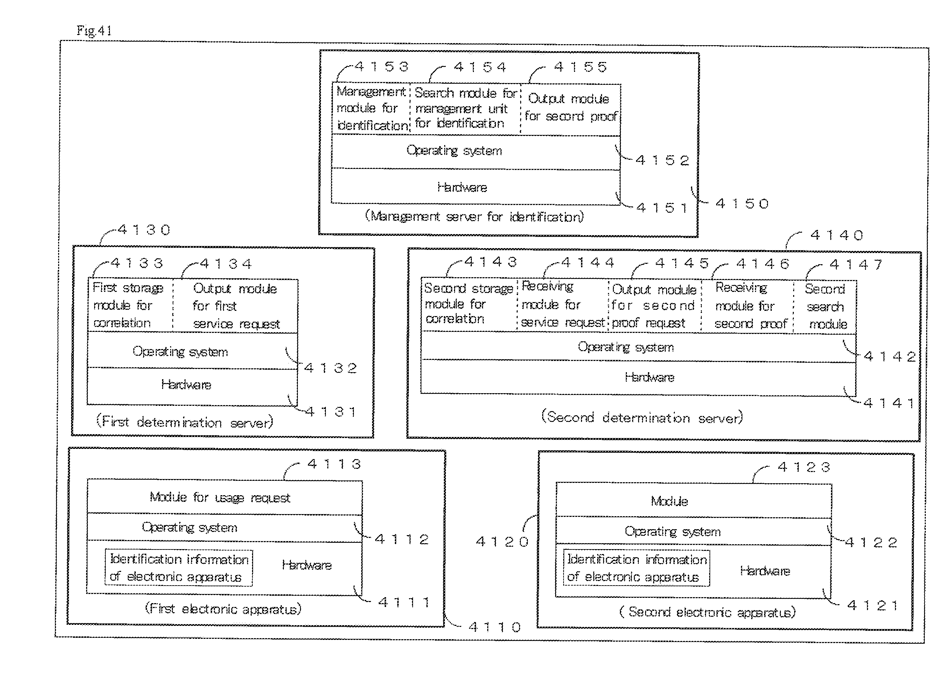

Fig. 41 is a diagram showing an example of configuration for implementing the third embodiment. In Fig. 41, the second determination server (4140) is explained. As shown in Fig. 41, a physical configuration of the second determination server (4140) is implemented by the hardware (4140) configured by a CPU, a memory, a hard disk, an input/output device, a network interface etc. Logically speaking, an operating system (4142), basic software for abstraction of functions of the hardware (4141), or for managing operation of the hardware (4141) is operated, and program configured by including modules such as the second storage module for correlation (4143), the receiving module for service request (4144), the output module for second proof request (4145), the receiving module for second proof (4146), and the second search module (4147), which are for implementing the second storage unit for correlation (3221), the receiving unit for service request (3222), the output unit for second proof request (3223), the receiving unit for second proof (3224), and the second search unit (3225), respectively, is operated on the software. This program executes the processing of Fig. 36, for example. Note that the second search module (3525) is not essential for the configuration for implementing.

Note that, as to the first determination server (4130) and the management server for identification (4150), an operating system runs on the hardware, and program including modules for implementing the components is operated thereon, so that it is possible to implement. Note that, as to the first electronic apparatus (4110) and the second electronic apparatus (4120), similar to the respective servers, an operating system runs on the hardware, and program including modules for implementing the components is operated thereon, so that it is possible to implement. Further, in the electronic apparatus, the identification information of electronic apparatus correlated with the hardware (4111 and 4121) is stored.

### <Brief Description of Effects of Third Embodiment>

This embodiment is, similar to the first embodiment, configured by the service server group, the electronic apparatus, the determination server, and the management server for identification. However, the embodiment is different from the first embodiment in that the second determination server, which has received the first service request outputted from the first determination server, carries out a search of a management unit for identification, and outputs the second service request to the management server for identification, and the management server for identification carries out search of the management unit for identification, thereby outputting the proof based on the search result. In the above configuration, the management of user identification is carried out by incorporating a vertical-integrated system including the first electronic apparatus, the first service server, and the first determination server, with another vertical-integrated system, thereby flexibly providing service. In this case, even if the service request is sent from a server, which has no relationship of trust, the proof is given from the management server for identification, so that it is possible to establish reliability in the system, thereby ensuring safety in the service provision. Moreover, it is possible for the first user to simultaneously request for the same service for all second users who have the subordinate-superior relationship with the first user, thereby improving user-friendliness in the case of plurality of the second users.

### BRIEF DESCRIPTION OF THE DRAWINGS

Fig. 1 is a diagram showing problems of the conventional system.
Fig. 2 is a diagram explaining an outline of the preset invention.
Fig. 3 is a diagram explaining information regarding subordinate-superior relationship.
Fig. 4 is a conceptual diagram of a first embodiment.
Fig. 5 is a functional block diagram of the first embodiment.
Fig. 6 is a diagram showing an example of information stored and managed by a management unit for identification of a management server for identification of the first embodiment.
Fig. 7 is a diagram showing an example of a table stored by a first storage for correlation of the first embodiment.
Fig. 8 is a diagram showing an example of a usage request.
Fig. 9 is a diagram showing an example of a first proof request.
Fig. 10 is a diagram showing an example of a service request with proof.
Fig. 11 is a flowchart showing processing of a first determination server of the first embodiment.
Fig. 12 is a diagram showing an example of a table stored by a second storage for correlation of the first embodiment.
Fig. 13 is a second functional block diagram of the first embodiment.
Fig. 14 is a flowchart showing processing of a second determination server of the first embodiment.
Fig. 15 is a flowchart showing processing of a management server for identification of the first embodiment.
Fig. 16 is a sequence diagram showing processing of an entire system of the first embodiment.
Fig. 17 is a diagram showing overall processing of the entire system of the first embodiment.
Fig. 18 is a diagram showing an example of configuration for implementing the first embodiment.

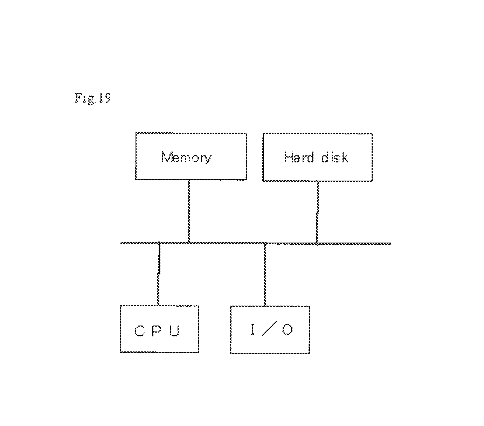

Fig. 19 is a diagram showing a hardware configuration of the first embodiment.
Fig. 20 is a conceptual diagram of a second embodiment.
Fig. 21 is a functional block diagram of the second embodiment.
Fig. 22 is a diagram showing an example of a service request with proof request of the second embodiment.
Fig. 23 is a flowchart showing processing of a first determination server of the second embodiment.
Fig. 24 is a diagram showing an example of a second service request with proof of the second embodiment.
Fig. 25 is a second functional block diagram of the second embodiment.
Fig. 26 is a flowchart showing processing of a second determination server of the second embodiment.
Fig. 27 is a flowchart showing processing of a management server for identification of the second embodiment.
Fig. 28 is a sequence diagram showing processing of an entire system of the second embodiment.
Fig. 29 is a diagram showing overall processing of the entire system of the second embodiment.
Fig. 30 is a diagram showing an example of configuration for implementing the second embodiment.
Fig. 31 is a conceptual diagram of a third embodiment.
Fig. 32 is a functional block diagram of the third embodiment.
Fig. 33 is a diagram showing an example of a first service request of the third embodiment.
Fig. 34 is a flowchart showing processing of a first determination server of the third embodiment.
Fig. 35 is a second functional block diagram of the third embodiment.
Fig. 36 is a flowchart showing processing of a second determination server of the third embodiment.
Fig. 37 is a flowchart showing processing of a management server for identification of the third embodiment.
Fig. 38 is a first sequence diagram showing processing of an entire system of the third embodiment.
Fig. 39 is a second sequence diagram showing processing of the entire system of the third embodiment,
Fig. 40 is a diagram showing overall processing of the entire system of the third embodiment.
Fig. 41 is a diagram showing an example of configuration for implementing the third embodiment.

### Description of Reference Numerals

501 First electronic apparatus
502 First service server group
503 Second electronic apparatus
504 Second service server group
510 First determination server
511 First storage unit for correlation
512 Output unit for first proof request
513 Receiving unit for first proof
514 Output unit for service request with proof
520 Second determination server
521 Second storage unit for correlation
522 Receiving unit for service request with proof
530 Management server for identification
531 Management unit for identification
532 Search unit for management unit for identification
533 Output unit for first proof

## Claims

1. A system, comprising:
a first service server group, which provides a first service to a first electronic apparatus based on a first determination;
a second service server group, which provides a second service to a second electronic apparatus based on a second determination;
a first electronic apparatus, which is used by a first user, and receives the first service from the first service server group;
a second electronic apparatus, which is used by a second user nonidentical to said first user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages information regarding subordinate-superior relationship between the first user and the second user based on shared identification information for uniquely identifying the user in the system,
wherein the first determination server comprises
a first storage unit for correlation, which stores the shared identification information of the first user correlated with the identification information of the first electronic apparatus,
an output unit for first proof request, which outputs the first proof request, including the shared identification information of the first user, based on a usage request for the second determination server from the first electronic apparatus,
a receiving unit for first proof, which receives the first proof including said information regarding subordinate-superior relationship returned from the management server for identification in accordance with the first proof request outputted from said output unit for first proof request, and
an output unit for service request with proof, which outputs the service request with proof including the information regarding subordinate-superior relationship based on the first proof received by said receiving unit for first proof,
the second determination server comprises
a second storage unit for correlation, which stores the shared identification information of the second user correlated with the identification information of the second electronic apparatus, and
a receiving unit for service request with proof, which receives the service request with proof, and
the management server for identification comprises
a search unit for management unit for identification, which searches said information regarding subordinate-superior relationship in the management unit for identification by means of the shared identification information of the first user as a key, included in the first proof request outputted by the first determination server, and
an output unit for proof, which outputs said first proof based on a search result by the search unit for management unit for identification.

2. The system according to Claim 1,
wherein the second determination server comprises
a second search unit, which searches the second storage unit for correlation by means of the shared identification information of the second user as a key based on the service request with proof received by the receiving unit for service request with proof.

3. A system, comprising:
a first service server group, which provides a first service to a first electronic apparatus based on a first determination;
a second service server group, which provides a second service to a second electronic apparatus based on a second determination;
a first electronic apparatus, which is used by a first user, and receives the first service from the first service server group;
a second electronic apparatus, which is used by a second user nonidentical to said first user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages information regarding subordinate-superior relationship between the first user and the second user based on shared identification information for uniquely identifying the user in the system,
wherein the first determination server comprises
a first storage unit for correlation, which stores the shared identification information of the first user correlated with the identification information of the first electronic apparatus, and
an output unit for service request with proof request, which outputs the service request with proof request, including the identification information of the second determination server and the shared identification information of the first user, based on a usage request for the second determination server from the first electronic apparatus,
the second determination server comprises
a second storage unit for correlation, which stores the shared identification information of the second user correlated with the identification information of the second electronic apparatus, and
a receiving unit for second service request with proof, which receives the second service request with proof, including the information regarding subordinate-superior relationship outputted by the management server for identification, and
the management server for identification comprises
a receiving unit for service request with proof request, which receives the service request with proof request outputted by the first determination server,
a search unit for management unit for identification, which searches for said information regarding subordinate-superior relationship in the management unit for identification by means of the shared identification information of the first user, included in the service request with proof request received by the receiving unit for service request with proof request, as a key, and
an output unit for second service request with proof, which outputs said second service request with proof based on the search result by the search unit for management unit for identification.

4. The system according to Claim 3,
wherein the second determination server comprises
a second search unit, which searches the second storage unit for correlation by means of the shared identification information of the second user as a key based on the second service request with proof received from the management server for identification.

5. A system, comprising:
a first service server group, which provides a first service to a first electronic apparatus based on a first determination;
a second service server group, which provides a second service to a second electronic apparatus based on a second determination;
a first electronic apparatus, which is used by a first user, and receives the first service from the first service server group;
a second electronic apparatus, which is used by a second user nonidentical to said first user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages information regarding subordinate-superior relationship between the first user and the second user based on shared identification information for uniquely identifying the user in the system,
wherein the first determination server comprises
a first storage unit for correlation, which stores the shared identification information of the first user correlated with the identification information of the first electronic apparatus,
an output unit for first service request, which outputs the first service request including the shared identification information of the first user based on a usage request for the second determination server from the first electronic apparatus,
the second determination server comprises,
a second storage unit for correlation, which stores the shared identification information of the second user correlated with the identification information of the second electronic apparatus,
a receiving unit for service request, which receives the first service request outputted from the first determination server,
an output unit for second proof request, which outputs the second proof request including the shared identification information of the first user based on the first service request received by the receiving unit for service request, and
a receiving unit for second proof, which receives the second proof including said information regarding subordinate-superior relationship outputted by the management server for identification based on the second proof request outputted from said output unit for second proof request, and
the management server for identification comprises
a search unit for management unit for identification, which searches for said information regarding subordinate-superior relationship in the management unit for identification by means of the shared identification information of the first user, included in the second proof request outputted by the second determination server, as a key, and
an output unit for proof, which outputs said second proof based on the search result by the search unit for management unit for identification.

6. The system according to Claim 5, wherein,
the second determination server further comprises
a second search unit, which searches the second storage unit for correlation by means of the shared identification information of the second user as a key based on the first service request received by the receiving unit for service request, and on the second proof received by the receiving unit for second proof.

7. The first determination server according to Claim 1.

8. The second determination server according to Claim 1.

9. The second determination server according to Claim 2.

10. The management server for identification according to Claim 1.

11. A management method for user identification, including a system comprising
a first service server group, which provides a first service to a first electronic apparatus based on a first determination,
a second service server group, which provides a second service to a second electronic apparatus based on a second determination,
a first electronic apparatus, which is used by a first user, and receives the first service from the first service server group,
a second electronic apparatus, which is used by a second user nonidentical to said first user, and receives the second service from the second service server group,
a first determination server, which carries out the first determination of the first electronic apparatus based on identification information of the first electronic apparatus in order to receive said first service from the first service server group,
a second determination server, which carries out the second determination of the second electronic apparatus based on identification information of the second electronic apparatus in order to receive said second service from the second service server group, and
a management server for identification, in which a management unit for identification manages information regarding subordinate-superior relationship between the first user and the second user based on shared identification information for uniquely identifying the user in the system,
wherein the first determination server comprises
a first storage unit for correlation, which stores the shared identification information of the first user correlated with the identification information of the first electronic apparatus,
a step of outputting step first proof request, which outputs the first proof request, including the shared identification information of the first user, based on a usage request for the second determination server from the first electronic apparatus,
a step of receiving first proof, which receives the first proof including said information regarding subordinate-superior relationship returned from the management server for identification in accordance with the first proof request outputted from said step of outputting first proof request, and
a step of outputting service request with proof, which outputs the service request with proof including the information regarding subordinate-superior relationship based on the first proof received by said step of receiving first proof,
the second determination server comprises
a second storage unit for correlation, which stores the shared identification information of the second user correlated with the identification information of the second electronic apparatus, and
a step of receiving service request with proof, which receives the service request with proof, and
the management server for identification comprises
a step of searching management unit for identification, which searches said information regarding subordinate-superior relationship in the management unit for identification by means of the shared identification information of the first user as a key, included in the first proof request outputted by the first determination server, and
a step of outputting proof, which outputs said first proof based on a search result by the step of searching management unit for identification.

12. The management method for user identification according to Claim 11,
wherein the second determination server further comprises
a second step of searching, which searches the second storage unit for correlation by means of the shared identification information of the second user as a key based on the service request with proof received by the receiving unit for service request with proof.

13. The first determination server according to Claim 3.

14. The second determination server according to Claim 3.

15. The second determination server according to Claim 4.

16. The management server for identification according to Claim 3.

17. A management method for user identification, including a system comprising
a first service server group, which provides a first service to a first electronic apparatus based on a first determination,
a second service server group, which provides a second service to a second electronic apparatus based on a second determination,
a first electronic apparatus, which is used by a first user, and receives the first service from the first service server group,
a second electronic apparatus, which is used by a second user nonidentical to the first user, and receives the second service from said second service server group,
a first determination server, which carries out the first determination of the first electronic apparatus based on identification information of the first electronic apparatus in order to receive said first service from the first service server group,
a second determination server, which carries out the second determination of the second electronic apparatus based on identification information of the second electronic apparatus in order to receive said second service from the second service server group, and
a management server for identification, in which a management unit for identification manages information regarding subordinate-superior relationship between the first user and the second user based on shared identification information for uniquely identifying the user in the system,
wherein the first determination server comprises
a first storage unit for correlation, which stores the shared identification information of the first user correlated with the identification information of the first electronic apparatus, and
a step of outputting service request with proof request, which outputs the service request with proof request, including the identification information of the second determination server and the shared identification information of the first user, based on a usage request for the second determination server from the first electronic apparatus,
the second determination server comprises
a second storage unit for correlation, which stores the shared identification information of the second user correlated with the identification information of the second electronic apparatus, and
a step of receiving for second service request with proof, which receives the second service request with proof, including said information regarding subordinate-superior relationship outputted by the management server for identification, and
the management server for identification comprises
a step of receiving service request with proof request, which receives the service request with proof request outputted by the first determination server,
a step of searching management unit for identification, which searches said information regarding subordinate-superior relationship in the management unit for identification by means of the shared identification information of the first user, included in the service request with proof request received by the step of receiving service request with proof request, as a key, and
a step of outputting second service request with proof, which outputs said second service request with proof based on the search result by the step of searching management unit for identification.

18. The management method for user identification according to Claim 17,
wherein the second determination server further comprises
a second step of searching, which searches the second storage unit for correlation by means of the shared identification information of the second user as a key based on the second service request with proof received from the management server for identification.

19. The first determination server according to Claim 5.

20. The second determination server according to Claim 5.

21. The second determination server according to Claim 6.

22. The management server for identification according to Claim 5.

23. A management method for user identification, including a system comprising
a first service server group, which provides a first service to a first electronic apparatus based on a first determination,
a second service server group, which provides a second service to a second electronic apparatus based on a second determination,
a first electronic apparatus, which is used by a first user, and receives the first service from the first service server group,
a second electronic apparatus, which is used by a second user nonidentical to said first user, and receives the second service from the second service server group,
a first determination server, which carries out the first determination of the first electronic apparatus based on identification information of the first electronic apparatus in order to receive said first service from the first service server group,
a second determination server, which carries out the second determination of the second electronic apparatus based on identification information of the second electronic apparatus in order to receive said second service from the second service server group, and
a management server for identification, in which a management unit for identification manages information regarding subordinate-superior relationship between the first user and the second user based on shared identification information for uniquely identifying the user in the system,
wherein the first determination server comprises
a first storage unit for correlation, which stores the shared identification information of the first user correlated with the identification information of the first electronic apparatus,
a step of outputting first service request, which outputs the first service request including the shared identification information of the first user based on a usage request for the second determination server from the first electronic apparatus,
the second determination server comprises,
a second storage unit for correlation, which stores the shared identification information of the second user correlated with the identification information of the second electronic apparatus,
a step of receiving service request, which receives the first service request outputted from the first determination server,
a step of outputting second proof request, which outputs the second proof request including the shared identification information of the first user based on the first service request received by the step of receiving service request, and
a step of receiving second proof, which receives the second proof including said information regarding subordinate-superior relationship outputted by the management server for identification based on the second proof request outputted from said step of outputting second proof request, and
the management server for identification comprises
a step of searching management unit for identification, which searches said information regarding subordinate-superior relationship in the management unit for identification by means of the shared identification information of the first user, included in the second proof request outputted by the second determination server, as a key, and
a step of outputting proof, which outputs said second proof based on the search result by the step of searching management unit for identification.

24. The management method for user identification according to Claim 23,
wherein the second determination server further comprises
a second step of searching, which searches the second storage unit for correlation by means of the shared identification information of the second user as a key based on the first service request received by the receiving unit for service request, and on the second proof received by the receiving unit for second proof.
